# EUROPEAN PATENT APPLICATION

(11) **EP 2 161 883 A1**
(43) Date of publication of application: **10.03.2010**
(21) Application number: 08764740.0
(22) Date of filing: 27.05.2008
(51) Int. Cl.: H04L 12/56, H04Q 7/20, H04Q 7/38

(54) **COMMUNICATION SYSTEM USING NETWORK BASE IP MOBILITY PROTOCOL, CONTROL DEVICE, ROUTER, AND COMMUNICATION METHOD THEREOF**

(30) Priority: 28.05.2007 JP 2007140817; 28.05.2007 JP 2007140818; 28.05.2007 JP 2007140820
(71) Applicant: Sharp Kabushiki Kaisha, Osaka-shi, Osaka 545-8522 (JP)
(72) Inventor: TOYOKAWA, Suguru, Osaka 545-8522 (JP)
(74) Representative: Müller - Hoffmann & Partner
(86) International application number: PCT/JP2008/059712
(87) International publication number: WO 2008/146810

(57) **Abstract**

When an MN 1 is handed over from an MAGa 2 to an MAGb 3, a network-based IP mobility protocol processor 18 of an LMA 5 transmits a header compression information forward command to MAGa 2, and a network-based IP mobility protocol processor 13 of MAGa 2 transmits header compression information to MAGb 3. MAGb 3 having received the header compression information stores the information into a storage 14 and performs a compression and extension process of the data associated with MN 1 by referring to the information.

In this way, in a network-based IP mobility protocol, even if the MN has moved, the MN or MAG serves as a compressor and decompressor, so that it is possible to save the band for the last one hop, which is the narrowest band.

## Description

### Technical Field

The present invention relates to a communication technology using a network-based IP mobility protocol.

### Background Art

In recent years, research and development of mobility support in the IP layer such as Mobile IPv6 (Internet Protocol version6) etc., have been eagerly carried out. Mobile IP is a protocol of the network layer as the third layer of the OSI (Open Systems Interconnection) reference model, established by ISO (International Organization for Standardization), and is a technology for maintaining communications while hiding movement of a client (switching networks/communication media, momentary blackout of communication, and the like) from upper applications.

In TCP/IP (Transmission Control Protocol/Internet Protocol) as a communication protocol generally used in the current Internet, the IP address is an identifier and at the same time indicates the location on the network. Accordingly, when a node that has been connected to a certain network is changed over to another network, the IP address also changes so that it becomes impossible to maintain sessions.

To deal with this, Mobile IP assigns a unique address to each node so as to replace the IP address that is being actually used within the TCP/IP stack, to thereby provide a configuration that make it look as if the node is communicating based on the assigned unique address with the upper layer or a communication partner, no matter where the node is located at any network (see non-patented document 1, for example).

This Mobile IP is made up of a mobile node (Mobile Node, moving terminal, which will be referred to hereinbelow as "MN"), a home agent (Home Agent, which will be referred to hereinbelow as "HA") and a node called a correspondent node (Correspondent Node, which will be referred to hereinbelow as "CN").

The MN has a constantly unvaried address called home address (Home Address, which will be referred to hereinbelow as "HoA"), and the node that manages this address is the HA. The MN acquires an address used for actual communications, called care-of address(Care-of-Address, which will be referred to hereinbelow as "CoA"), in some manner, e.g., through router advertisement (Router Advertisement, which will be referred to hereinbelow as "RA") of stateless address auto configuration or through a DHCP (Dynamic Host Configuration Protocol)v6 of stateful address auto configuration, when the MN has been connected to a network other than the home link, i.e., the HA' s link. The MN notifies the HA of the CoA acquired herein by a registration request message called Binding Update, which will be referred to hereinbelow as "BU".

As a result of this, when a node(=CN) that wants to communicate with the MN sends a packet to the HoA, the packet initially reaches the HA because the HoA is the address on the link that is controlled by the HA. As a result, the MN can communicate using the HoA. In the MN, an application that operates on the MN performs communication, constantly using the IP address called the HoA.

The CoA is used for the source address or destination of actual IPv6 packets. In order to hide movement against the upper application, techniques such as IPv6 in IPv6 encapsulation, mobility header and the like are used. As a result of this, the HoA is notified to the application while the IPv6 address (CoA) actually used is hidden.

Further, when the communication path to the CN is optimized in this Mobile IPv6, after signaling for security or a testing sequence called Return Routability, which will be referred to hereinbelow as "RR", the MN is determined to send a BU for route optimization to the CN. The RR is the function of notifying the CN of the validity of binding between the HoA and the CoA.

The RR is made up of messages sent from the MN to the CN, including HoTI (Home Test Init) sent by way of the HA and CoTI (Care of Test Init) sent directly to the CN and messages returned from the CN to the MN, including HoT (Home Test) returned by way of the HA and CoT (Care of Test) directly returned to the MN. When this RR sequence is completed correctly, the MN transmits BU to the CN in order to give notice of the CoA of itself. As a result of this, the CN can get the correct CoA of the MN, and becomes able to send packets directly, or achieve route optimization, instead of sending via the lengthy path passing through the HA.

More specifically, until this route optimization is completed, communication between MN and CN is performed by way of the HA, so that packets are sent between CN and HA by normal IPv6 while the packets are sent between HA and MN, being IPv6 encapsulated in IPv6. After route optimization, packets are directly delivered between MN and CN. In this while HoA is written into an options header.

There has been disclosed as to Mobile IPv4 a system which provides a proxy function necessary as a CN for a terminal that communicates with an MN but has no MIPv4 function (see patent document 1, for example).

However, this Mobile IPv6 cannot support fast handover, FMIPv6 (Fast Handovers for Mobile IPv6) has been proposed (see non-patented document 2, for example).

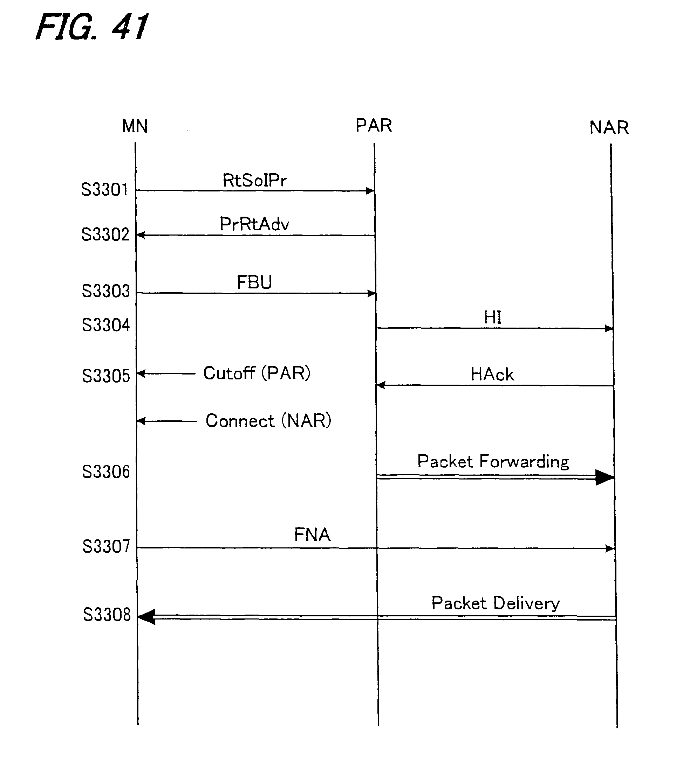

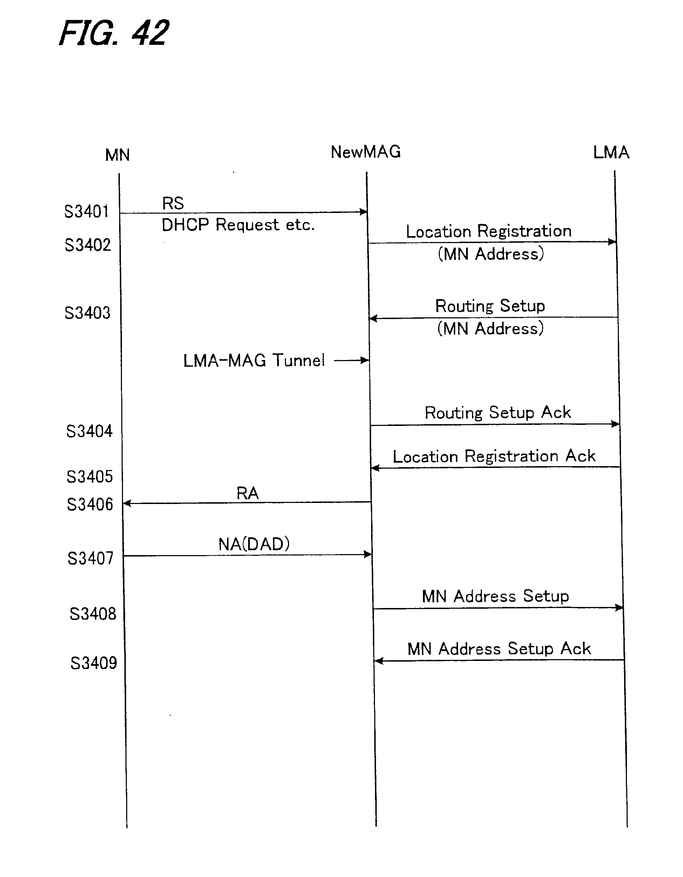

FIG. 41 is a sequence diagram showing the procedural steps of the process in FMIPv6. One example will be described with FIG. 42.

RtSolPr (Router Solicitation for Proxy Advertisement, router which will be referred to hereinbelow as "RtSolPr") at S3301 in FIG. 41 is a form that is extended for FMIPv6 from router solicitation, or the message which is used in normal IPv6 and sent from the host to a router in order to make the router create a router notice.

The PAR (Previous Access Router, the access router being engaged in communication, which will be referred to hereinbelow as "PAR") having received this RtSolPr from an MN, transmits PrRtAdv (Proxy Router Advertisement, which will be referred to hereinbelow as "PrRtAdv") to the MN at S3302. PrRtAdv is a form that is extended for FMIPv6 from RA used in normal IPv6.

The MN having received this PrRtAdv transmits to the PAR, FBU (Fast Binding Update), the binding update for fast handover at S3303. This FBU includes NCoA (New Care of address, new CoA, which will be referred to hereinbelow as "NCoA") information. Since NCoA is an address belonging to the link of the NAR (New Access Router, newly accessed router, which will be referred to hereinbelow as "NAR"), the PAR becomes able to transfer packets to the NAR.

The PAR having received FBU transmits HI (Handover Initiate, which will be referred to hereinbelow as "HI") to the NAR at S3304 in order to initialize changeover or handover of the MN.

The NAR transmits HAck (Handover Acknowledge, which will be referred to hereinbelow as "HAck") in conformation of this HI to the PAR at S3305, and packet transfer between PAR and NAR is started at S3306.

Then, when the MN has completely moved and accessed to the control (the same link) of the NAR, the MN transmits FNA (Fast Neighbor Advertisement, which will be referred to hereinbelow as "FNA") to the NAR at S3307. This is to notify the NAR of the fact that handover has been completed. As a result, the NAR starts delivering packets to the MN at S3308.

Since MIPv6 and FMIPv6 control movement on the MB basis, MIPv6 and FMIPv6 are called host-based mobility protocols. In contrast, a network-based IP mobility protocol, which enables an MN that is not installed with a special protocol for its movement to move by performing movement control on the network side, has been also proposed by ITEM (Internet Engineering Task Force) (see non-patented document 3, for example).

This enables the MN not to use CoA and is effective in eliminating MN's encapsulation of packets and the like and in eliminating MN's signaling for movement. The procedures of handover based on this first network-based IP mobility protocol will be described with reference to FIG. 42.

First, at S3401 the MN, after its movement, transmits a network configuration (network setup) request message such as an RS (Router Solicitation, which will be referred to hereinbelow as "RS"), a DHCP Request or the like, to the router or Mobile Access Gateway (which will be referred to hereinbelow as "MAG"), denoted as "NewMAG" in FIG. 42, on the newly accessing link.

An MAG is a router for relaying between the MN having moved to the link and a route router as a control apparatus for performing IP Mobility control, or Local Mobility Anchor (which will be referred to hereinbelow as "LMA").
The LMA controls a plurality of MAGs connected via network. The LMA manages the identifiers and IP addresses of the MN and MAGs in its storage.
The MAG also manages the identifiers and IP addresses of the MN and LMA in its storage. These pieces of information the MAG manages can be acquired by communication with the LMA.
Between MAG and LMA, packets are tunneled by IPv6 in IPv6 encapsulation and adding a header with reference to the information managed in the storage, to thereby achieve correct routing.
In the network described above, it is assumed that the MN sends an RS, herein for example, to the MAG in the link the MN visits.

When receiving the RS from the MN, the MAG (NewMAG) transmits location registration (location registration request) to the LMA at S3402.

As the LMA receives the location registration, it detects the event of handover and transmits routing setup to the MAG(NewMAG) at S3403 to set up a tunneling path between the MAG(NewMAG) and the LMA.

Here, the setup of a tunneling path is to create a configuration in which the LMA encapsulates the packet addressed to the MN so as to be addressed to the MAG and transmits the packet to the MAG while the receiving MAG decapsulates the packet and forwards the packet to the MN.

The MAG (NewMAG) that has received this routing setup, transmits a routing setup Ack (Acknowledgement) for confirmation to the LMA at S3404.

Further, the LMA that has received the location registration from the MAG(NewMAG), transmits a location registration Ack for confirmation to the MAG (NewMAG) at S3405.

At S3406 the MAG (NewMAG) transmits RA to the MN, and the MN performs address configuration (address setup).

Thereafter, at S3407, the MN performs DAD (Duplicate Address Detection, which will be referred to hereinbelow as "DAD") using NA (Neighbor Advertisement, which will be referred to hereinbelow as "NA") so as to confirm that the address is unique and complete the address configuration. The MAG(NewMAG) also transmits the MN address setup to the LMA at S3408. At S3409, the LMA transmits MN address setup Ack to the MAG(NewMAG).

As a result of completion of setup of this LMA-MAG tunnel route and the MN address configuration, packets are reachable to the MN. This is the way of handover in the network-based mobility protocol. In one words, since the packet addressed to the MN is sent by way of the LMA, it is possible to route the packet to the MN by completing the tunnel between the LMA and the MAG.

There is another proposal of a Proxy Mobile IP scheme using a network-based IP mobility protocol, in which an MAG provides a proxy function for MNs in Mobile IP by using an AAA (Authentication Authorization Accounting) server for performing authentication (see non-patented document 4, for example).

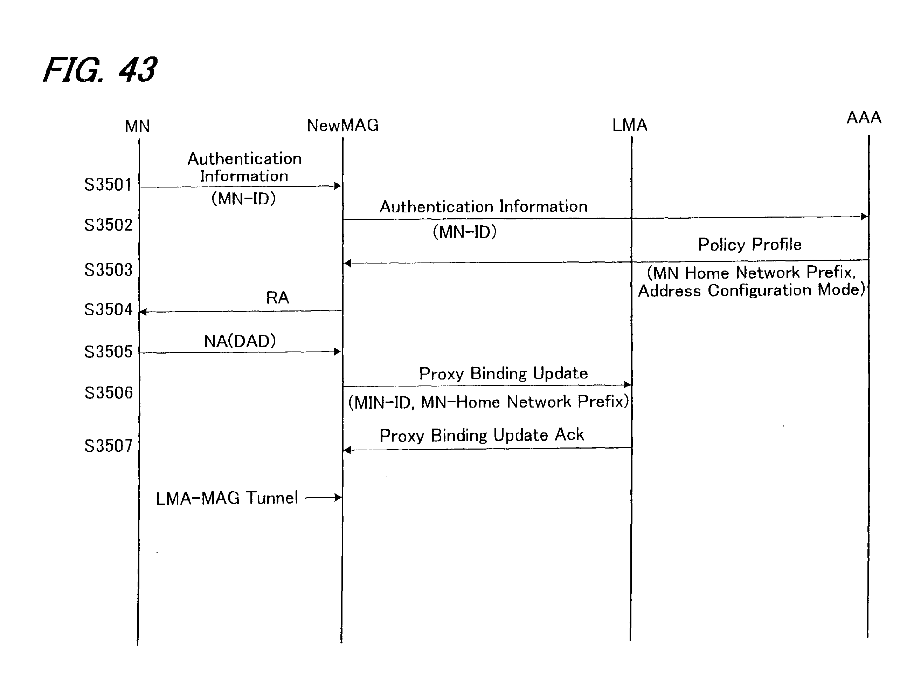

The procedural steps of handover in this second network-based IP mobility protocol Proxy Mobile IP scheme will be described using a sequence diagram shown in FIG. 43.

First, at S3501, the MN, after its movement, transmits authentication information including the ID of itself, i.e., MN-ID, to the MAG(NewMAG).

At S3502, the MAG(NewMAG) having received the authentication information from the MN, transmits the authentication information including MN-ID to the AAA server as an authentication server for authentication.

At S3503, the AAA server having received the authentication information from the MAG(NewMAG) checks the validity of the MN and returns a policy profile if the validity is conformed. This policy profile includes MN address configuration information such as information on the home network prefix, the configuration scheme (either stateful setup or stateless setup) and the like.

In the MAG(NewMAG) having received from the AAA server the policy profile including the address configuration information, the RA becomes able to be sent to the MN, so that the RA is transmitted to the MN at S3504.

The MN having received the RA from the MAG(NewMAG), configures an address and performs NA and DAD at S3505. This step may be omitted.

The MAG(NewMAG), after sending the RA, transmits a proxy registration request (Proxy Binding Update) to the LMA at S3506 in order to create a tunnel to the LMA.
This message includes MN-ID, home prefix of the MN and the like.

The LMA having received the Proxy Binding Update, returns Proxy Binding Update Ack for confirmation to the MAG(NewMAG) at S3507.

In this way, a bidirectional tunnel is created between the LMA and the MAG so that routing to the MN is made possible.

Also, as a technology of compressing the header of IP/UDP/RTP(Internet Protocol/User Datagram Protocol/Real-time Transport Protocol), Robust Header Compression (which will be called "ROHC" hereinbelow) has been known (see non-patented document 5, for example).

In this ROHC, CID (Context ID) that is the discrimination ID to be notified at the time of initialization is associated with a predicable header field, this information is shared between the compressor for compressing the data and the decompressor for restoring the data, and the compressor transmits the data added with the CID in place of the header while the decompressor restores the header from the CID.

This predicable header field also includes the source IP address that indicates the sender and the destination IP address that indicates the receiver.

Further, assignment of sequence numbers based on W-LSB(Window-Based Least-Significant Bit) enables prediction of other fields and provides robustness against packet loss.

In addition, ROHC has a state and mode. As to the state, the amount of compression is adjusted to three levels, complete header/difference/compressed header to the maximum, in accordance with the link condition. As to the mode, the feedback timing by the decompressor is selected from three kinds, no feedback, feedback when there is a problem, and feedback at all times.

This selection of the state and mode in accordance with the link condition as well as use of W-LSB enables ROHC to provide high compression performance and high robustness.

Further, relocation methods of header compression context have been disclosed (see patent document 2, for example).

According to this invention, the old service GPRS support node (SGSN) transfers the context as to header compression to the new SGSN so that the new SGSN reuses the context. Herein, GPRS represents General Packet Radio Service.
Patent document 1:
   Japanese Patent Application Laid-open 2001-224070
Patent document 2:
   Japanese Patent Disclosure 2004-517580
Non-patented document 1: Request for Comments(RFC)3775, "Mobility Support in IPv6"
Non-patented document 2: Request for Comments (RFC)4068, "Fast Handovers for Mobile IPv6"
Non-patented document 3: Internet Draft "draft-giaretta-netlmm-dt-protocol"
Non-patented document 4: Internet Draft "draft-sgundave-mip6-proxymip6"
Non-patented document 5: Request for Comments(RFC)3095, "RObust Header Compression (ROHC): Framework and four profiles: RTP, UDP, ESP, and uncompressed".

### Disclosure of Invention

### Problems to be Solved by the Invention

However, it is difficult to use the ROHC in the network-based IP mobility protocol.
Because the most important object of the header compression is to save the band (of the wireless link in most cases) for the last one hop, which is the narrowest band, it is less effective unless the decompressor for MNs resides in MNs, and it is less effective if the packet compressor from MNs also resides in MNs.

That is, the decompressor for packets to MNs should be an MN, and in this case, the compressor is either the LMA or MAG. Here, when it is assumed that compression is performed at the LMA, the relaying MAG does not have any IP address information on MN when the MAG decapsulates the packet sent from the LMA, hence the MAG cannot know which MN the MAG should deliver the packet to.

Further, when a packet is transmitted from an MN, it is impossible to determine the MN from which the packet has been sent by way of the MAG, so that the packet cannot be extended at the LMA.

On the other hand, when it is assumed that compression is performed at MAGs, since a new MAG, after handover, has no state, it has to start the operation over again from the phase for creating the state, hence the advantage of header compression weakens. In sum, it is difficult by either of these methods to efficiently perform header compression.

These are the common problems in the first and second network-based IP mobility protocols.

Also, if the technology of patent document 2 is tried to use, it is impossible to use the technology because the old MAG does not know the address of the new MAG.

However, when route optimization is attempted in communication between a mobile terminal of the first and second network-based IP mobility protocols and a mobile terminal of Mobile IPv6, signalings such as RR and BU would be exchanged with the mobile terminal of the network-based IP mobility protocol. Further, after route optimization, options headers are attached so that the overhead of the header becomes large. These facts lead to the result that the band for the last one hop (a wireless link in most cases), which is the narrowest band, cannot be used efficiently.

Further, even though the function of patent document 1 is extended for IPv6 and used for MAGs, there occurs handover in the network-based IP mobility protocol, which makes it impossible to continue processing after handover. This occurs because data and BC (Binding Cache) for route optimization cannot be used since the MAG after handover does not have data and BC.

On the other hand, when it is assumed that compression is performed at MAGs, since the MAG to which the MN has moved has no state, the MAG has to start the operation over again from the phase for creating the state, hence the advantage of header compression weakens. In sum, it is difficult by either of these methods to efficiently perform header compression.

Also, if the technology of patent document 2 is tried to use, it is impossible to use this because the previously accessed MAG of the MN does not know the address of the newly accessed MAG.

Further, if fast handover is carried out, there is a possibility that the order of packets is nested. Since the nested relation of packets may cause asynchronism, header compression efficiency is lowered.

Further, when the communication partner is a Mobile IP terminal, generation of signalings for Mobile IP and presence of options headers causes reduction in compression efficiency.

The present invention has been devised to solve the above problems, it is therefore an object of the present invention to provide a communication system, control apparatus and router using a network-based IP mobility protocol as well as to a communication method for the same, in which, in the network-based IP mobility protocol, an MN can make communication with an Mobile IP terminal without reduction in compression efficiency, and even when an MN has moved, the MN or MAG functions as a compressor or decompressor so as to be able to save the band for the last one hop, which is the narrowest band.

Also, the present invention has been devised to solve the above problems, it is therefore an object of the present invention to provide a communication system, control apparatus and router using a network-based IP mobility protocol as well as to a communication method for the same, in which when communication with a mobile terminal based on Mobile IPv6 is made in the network-based IP mobility protocol, the band for the last one hop, which is the narrowest band, is made efficient use of so as to be able to continue communication with the optimized route even after handover.

### Means for Solving the Problems

In view of the above circumstances, the communication system using a network-based IP mobility protocol according to the first invention is a communication system in which a mobile terminal, based on the network-based IP mobility protocol, performs communication by transmission and reception of data through a router that belongs to the same link, based on an address uniquely assigned to the mobile terminal, and when the mobile terminal has moved to another network, communication is changed over by the control of a control apparatus, and is **characterized in that** the router on the network which the mobile terminal has newly accessed, receives a notice including the identifier of the mobile terminal from the mobile terminal and transmits a notice including the identifier of the mobile terminal and the identifier or IP address of the router to the control apparatus; and, the control apparatus transmits a header compression information forward command notice to the previously accessed router of the mobile terminal so as to cause the previously accessed router to transmit header compression information data to the newly accessed router.

The communication system using a network-based IP mobility protocol according to the second invention is **characterized in that** when transmitting the header compression information forward command notice to the previously accessed router of the mobile terminal, the control apparatus also transmits a buffer forward command notice so as to cause the previously accessed router to forward data addressed to the mobile terminal to the newly accessed router.

The communication system using a network-based IP mobility protocol according to the third invention is **characterized in that** the control apparatus transmits the header compression information forward command notice and the buffer transfer command notice in a combined form.

The control apparatus according to the fourth invention is a control apparatus which is used for a system in which a mobile terminal, based on the network-based IP mobility protocol, performs communication by transmission and reception of data through a router that belongs to the same link, based on an address uniquely assigned to the mobile terminal, and which performs control of changing over communication when the mobile terminal has moved to another network, comprising: a communication means for receiving a notice, from the router on the network which the mobile terminal has moved, including the identifier of the mobile terminal and the identifier or IP address of the router; a storing means for holding communication information as to the relaying router and the mobile terminal; and a control means, which updates the information on the newly accessed router and the information as to data forwarding between the routers by referring to the storing means about the communication information on the mobile terminal, based on the identifier of the mobile terminal included in the notice from the router, and which creates a header compression information forward command notice, including the identifier of the mobile terminal and the identifier or IP address of the newly accessed router, so as to instruct the previously accessed router to forward header compression information to the newly accessed router, and wherein the communication means transmits the header compression information forward command notice to the previously accessed router.

The control apparatus according to the fifth invention is **characterized in that** the control means creates a buffer forward command notice, including the identifier of the mobile terminal and the identifier or IP address of the newly accessed router, so as to instruct the previously accessed router to forward data addressed to the mobile terminal to the newly accessed router, and the communication means, when transmitting the header compression information forward command notice to the previously access router, also transmits the buffer forward command notice.

The control apparatus according to the sixth invention is **characterized in that** the control apparatus transmits the header compression information forward command notice and the buffer transfer command notice to the previously accessed router in a combined form.

The router according to the seventh invention is a router for performing transmission and reception of data with a mobile terminal that belongs to the same link and performs communication using network-based IP mobility protocol based on an address uniquely assigned to the mobile terminal under the control of a control apparatus, comprising: a storing means for storing header compression information used when data is transmitted to the mobile terminal; a communication means for receiving from the control apparatus a header compression information forward command notice that includes the identifier of the mobile terminal and the identifier or IP address of the newly accessed router and instructs to forward the header compression information to the router to which the mobile terminal has newly accessed and; and a control means for forwarding the header compression information to the newly accessed router, in accordance with the forward command notice.

The router according to the eighth invention is **characterized in that** the communication means receives from the control apparatus a buffer forward command notice that includes the identifier of the mobile terminal and the identifier or IP address of the newly accessed router and instructs to forward data addressed to the mobile terminal to the newly accessed router of the mobile terminal, and the control means, when transmitting the header compression information, also forwards the data addressed to the mobile terminal.

The communication method according to the ninth invention is a communication method, in which a network-based IP mobility protocol is used, for causing a mobile terminal to perform transmission and reception of data through a router that belongs to the same link, based on an address uniquely assigned to the mobile terminal, and causing a control apparatus to perform control of changing over communication of the mobile terminal when the mobile terminal has moved to another network, the method comprising the steps of: receiving a notice from the mobile terminal to detects the movement of the mobile terminal to the same link, and giving notice of movement of the mobile terminal to the control apparatus, executed by the router on the network which the mobile terminal has newly accessed; and transmitting a header compression information forward command notice that instructs to forward header compression information to the newly accessed router to the previously accessed router, executed by the control apparatus.

The communication method according to the tenth invention is **characterized in that** the control apparatus is caused to execute the step of transmitting a buffer forward command notice that instructs to forward data addressed to the mobile terminal to the newly accessed router, to the previously accessed router.

In view of the above circumstances, the communication system using a network-based IP mobility protocol according to the eleventh invention is a communication system in which a mobile terminal, based on the network-based IP mobility protocol, performs communication by transmission and reception of data through a router that belongs to the same link, based on an address uniquely assigned to the mobile terminal, and when the mobile terminal has moved to another network, communication is changed over by the control of a control apparatus, and is **characterized in that** the router stores a binding cache as the communication information on the mobile terminal for relaying in Mobile IP protocol; and, the router, when the received data is that of communication between the mobile terminal that is controlled by the router itself and a terminal using Mobile IP protocol, relays between the mobile terminal and the terminal that uses Mobile IP protocol.

The communication system using the network-based IP mobility protocol according to the twelfth invention is **characterized in that** when the mobile terminal has moved to a network of the other router, the control apparatus transmits a forward command notice to the previously accessed router of the mobile terminal so as to forward the binding cache of the mobile terminal to the newly accessed router of the mobile terminal.

The communication system using the network-based IP mobility protocol according to the thirteenth invention is **characterized in that** when the mobile terminal makes communication with another terminal through a plurality of interfaces, the previously accessed router also transmits to the newly accessed router, a policy for forwarding (routing policy) for each of the interfaces together with the binding cache.

The control apparatus according to the fourteenth invention is a control apparatus which is used for a system in which a mobile terminal, based on the network-based IP mobility protocol, performs communication by transmission and reception of data through a router that belongs to the same link, based on an address uniquely assigned to the mobile terminal, and which performs control of changing over communication when the mobile terminal has moved to another network, comprising: a communication means for receiving a notice, from the router on the network which the mobile terminal has moved, including the identifier of the mobile terminal and the identifier or IP address of the router; a storing means for holding communication information as to the relaying router and the mobile terminal; and a control means, which updates the information on the newly accessed router and the information as to data forwarding between the routers by referring to the storing means about the communication information on the mobile terminal, based on the identifier of the mobile terminal included in the notice from the router, and which creates a buffer forward command notice including the identifier of the mobile terminal and the identifier or IP address of the newly accessed router so as to instruct the previously accessed router to forward data to the newly accessed router, and a binding cache forward command notice as the communication information as to the mobile terminal for relaying in the Mobile IP protocol, wherein the communication means transmits the buffer forward command notice and the binding cache forward command notice to the previously accessed router.

The router according to the fifteenth invention is a router for performing transmission and reception of data with a mobile terminal that belongs to the same link and performs communicationusingnetwork-basedIPmobilityprotocol, based on an address uniquely assigned to the mobile terminal under the control of a control apparatus, comprising: a storing means for storing a binding cache as the communication information on the mobile terminal for relaying in Mobile IP protocol; and, a control means which, when the received data is that of communication between the mobile terminal that is controlled by the router itself and a terminal using Mobile IP protocol, relays between the mobile terminal and the terminal that uses Mobile IP protocol.

The router according to the sixteenth invention is **characterized in that** the control means which, when receiving a binding cache forward command notice from the control apparatus, forwards the binding cache to the newly accessed router of the mobile terminal.

The router according to the seventeen invention is **characterized in that** when the mobile terminal makes communication with another terminal through a plurality of interfaces, the control means also forwards to the newly accessed router, a policy for forwarding (routing policy) for each of the interfaces together with the binding cache.

The communication method according to the eighteenth invention is a communication method, in which a network-based IP mobility protocol is used, for causing a mobile terminal to perform transmission and reception of data through a router that belongs to the same link, based on an address uniquely assigned to the mobile terminal, and causing a control apparatus to perform control of changing over communication of the mobile terminal when the mobile terminal has moved to another network, and is **characterized in that**
the router, when the received data is that of communication between the mobile terminal that is controlled by the router itself and a terminal using Mobile IP protocol, relays between the mobile terminal and the terminal that uses the Mobile IP protocol.

The communication method according to the nineteenth invention is **characterized in that** when the mobile terminal has moved to a network of the other router, the control apparatus transmits a forward command notice to the previously accessed router of the mobile terminal so as to forward a binding cache which is the communication information as to the mobile terminal to relay in the Mobile IP protocol.

In view of the above circumstances, the communication system using a network-based IP mobility protocol according to the twentieth invention is a communication system in which a mobile terminal, based on the network-based IP mobility protocol, performs communication by transmission and reception of data through a router that belongs to the same link, based on an address uniquely assigned to the mobile terminal, and when the mobile terminal has moved to another network, communication is changed over by the control of a control apparatus, and is **characterized in that** the router on the network which the mobile terminal has newly accessed, receives a notice including the identifier or IP address of the mobile terminal from the mobile terminal and transmits a notice including the identifier or IP address of the mobile terminal and the identifier or IP address of the router to the control apparatus; and, the control apparatus transmits to the previously accessed router of the mobile terminal, a binding cache forward command notice to instruct forwarding of a binding cache as the communication information as to the mobile terminal for relaying in Mobile IP protocol, a header compression information forward command notice to instruct forwarding of header compression information and a buffer forward command notice to instruct forwarding of data addressed to the mobile terminal, in a combined manner.

The communication system using a network-based IP mobility protocol according to the twenty-first invention is **characterized in that** the control apparatus transmits to the previously accessed router, a forwarding setup cancellation command notice to instruct cancellation of the forwarding setup between the control apparatus and the previously accessed router, combining the forwarding setup cancellation command notice with the binding cache forward command notice, the header compression information forward command notice and the buffer forward command notice.

The communication system using a network-based IP mobility protocol according to the twenty-second invention is the communication system in which a mobile terminal, based on the network-based IP mobility protocol, performs communication by transmission and reception of data through a router that belongs to the same link, based on an address uniquely assigned to the mobile terminal, and when the mobile terminal has moved to another network, communication is changed over by the control of a control apparatus, and is **characterized in that** the router on the network which the mobile terminal has newly accessed, receives a notice including the identifier or IP address of the mobile terminal from the mobile terminal and transmits a notice including the identifier or IP address of the mobile terminal and the identifier or IP address of the router to the control apparatus; the control apparatus transmits a notice including the identifier or IP address of the previously accessed router, to the newly accessed router of the mobile terminal; and the newly accessed router transmits a notice including the identifier or IP address of the mobile terminal and the IP address of the router, to the previously accessed router, and the previously accessed router transmits a binding cache as the communication information as to the mobile terminal for relaying in the Mobile IP protocol, a header compression information and data addressed to the mobile terminal in the buffer, to the newly accessed router.

The communication system using a network-based IP mobility protocol according to the twenty-third invention is **characterized in that** the router buffers in the order of the sequence number included in the header of the received data and forwards the data to the mobile terminal in the order of the sequence number.

The control apparatus according to the twenty-fourth invention is a control apparatus which is used for a system in which a mobile terminal, based on the network-based IP mobility protocol, performs communication by transmission and reception of data through a router that belongs to the same link, based on an address uniquely assigned to the mobile terminal, and which performs control of changing over communication when the mobile terminal has moved to another network, comprising: a communication means for receiving a notice, from the router on the network which the mobile terminal has moved, including the identifier or IP address of the mobile terminal and the identifier or IP address of the router; a storing means for storing communication information as to the relaying router and the mobile terminal; and a control means, which updates the information on the newly accessed router and the information as to data forwarding between the routers by referring to the storing means about the communication information on the mobile terminal based on the identifier of the mobile terminal included in the notice from the router, and which creates a binding cache forward command notice to instruct forwarding of a binding cache as the communication information as to the mobile terminal for relaying in Mobile IP protocol, from the previously accessed router to the newly accessed router, a header compression information forward command notice to instruct forwarding of header compression information and a buffer forward command notice to instruct forwarding of data addressed to the mobile terminal, wherein the communication means transmits the binding cache forward command notice, the header compression information forward command notice and the buffer forward command notice to the previously accessed router.

The control apparatus according to the twenty-fifth invention is **characterized in that** the control means transmits, a forwarding setup cancellation command notice to instruct cancellation of the forwarding setup between the control apparatus and the previously accessed router, to the previously accessed router by way of a communication means, and combines the forwarding setup cancellation command notice with the binding cache forward command notice, the header compression information forward command notice and the buffer forward command notice.

The control apparatus according to the twenty-sixth invention is a control apparatus which is used for a system in which a mobile terminal, based on the network-based IP mobility protocol, performs communication by transmission and reception of data through a router that belongs to the same link, based on an address uniquely assigned to the mobile terminal, and which performs control of changing over communication when the mobile terminal has moved to another network, comprising:
a communication means for receiving a notice, from the router on the network which the mobile terminal has moved, including the identifier or IP address of the mobile terminal and the IP address of the router; a storing means for storing communication information as to the relaying router and the mobile terminal; and a control means, which updates the information on the newly accessed router and the information as to data forwarding between the routers by referring to the storing means about the communication information on the mobile terminal based on the identifier of the mobile terminal included in the notice from the router, and creates a notice including the IP address of the previously accessed router, and wherein the communication means transmits the notice to the newly accessed router.

The router according to the twenty-seventh invention is a router for performing transmission and reception of data withamobile terminal that belongs to the same link and performs communication using network-based IP mobility protocol based on an address uniquely assigned to the mobile terminal under the control of a control apparatus, comprising:
a storing means for storing a binding cache as the communication information on the mobile terminal for relaying in Mobile IP protocol and header compression information used when data is transmitted to the mobile terminal; a communication means for receiving from the control apparatus, a binding cache forward command notice, header compression information forward command notice and buffer forward command notice that includes the identifier or IP address of the mobile terminal and the identifier or IP address of the newly accessed router and instructs forwarding of the binding cache, the header compression information and data addressed to the mobile terminal; and, a control means forwarding the binding cache, the header compression information and buffer data to the newly accessed router of the mobile terminal, in accordance with the forward command notices, and wherein the header of data is subjected to a compression and extension process between the router itself and the mobile terminal, and a proxy function for the mobile terminal is executed when transmission and reception of data on the Mobile IP protocol is performed.

The router according to the twenty-eighth invention is a router for performing transmission and reception of data with a mobile terminal that belongs to the same link and performs communication using network-based IP mobility protocol by use of an address uniquely assigned to the mobile terminal under the control of a control apparatus, comprising:
a storing means for storing a binding cache as the communication information on the mobile terminal for relaying on the Mobile IP protocol and header compression information used when data is transmitted to the mobile terminal; a communication means receiving from the newly accessed router of the mobile terminal, a notice including the identifier or IP address of the mobile terminal and the IP address of the router; and, a control means for forwarding a binding cache, header compression information and data addressed to the mobile terminal in the buffer, to the newly accessed router, in accordance with the notice, and wherein the header of data is subjected to a compression and extension process between the router itself and the mobile terminal, and a proxy function for the mobile terminal is executed when transmission and reception of data in Mobile IP protocol is performed.

The router according to the twenty-ninth invention is **characterized in that** the control means, after forwarding the data received frompreviously accessed router of the mobile terminal to the mobile terminal, forwards the data received from the control apparatus to the mobile terminal.

The router according to the thirtieth invention is **characterized in that** the control means buffers the data received from the control apparatus or the previously accessed router of the mobile terminal in the order of the sequence number contained in the headers of the data and forwards the data to the mobile terminal in the order of the sequence number.

The communication method according to the thirty-first invention is a communication method, in which a network-based IP mobility protocol is used, for causing a mobile terminal to perform transmission and reception of data through a router that belongs to the same link, based on an address uniquely assigned to the mobile terminal, and causing a control apparatus to perform control of changing over communication of the mobile terminal when the mobile terminal has moved to another network, the method comprising the steps of: detecting movement of the mobile terminal to the same link from a notice from the mobile terminal, and giving notice of movement of the mobile terminal to the control apparatus, executed by the router on the network which the mobile terminal has newly accessed; and transmitting to the previously accessed router, a binding cache forward command notice to instruct forwarding of a binding cache as the communication information as to the mobile terminal for relaying in Mobile IP protocol, a header compression information forward command notice to instruct forwarding of header compression information and a buffer forward command notice to instruct forwarding of data addressed to the mobile terminal, in a combined manner, executed by the control apparatus.

The communication method according to the thirty-second invention is a communication method, in which a network-based IP mobility protocol is used, for causing a mobile terminal to perform transmission and reception of data through a router that belongs to the same link, based on an address uniquely assigned to the mobile terminal, and causing a control apparatus to perform control of changing over communication of the mobile terminal when the mobile terminal has moved to another network, the method comprising the steps of: detecting movement of the mobile terminal to the same link from a notice from the mobile terminal, and giving notice of movement of the mobile terminal to the control apparatus, executed by the router on the network which the mobile terminal has newly accessed; transmitting a notice including the IP address of the previously accessed router to the newly accessed router, executed by the control apparatus; transmitting a notice including the identifier or IP address of the mobile terminal and the IP address of the router to the previously accessed router, executed by the newly accessed router; and transmitting a binding cache, header compression information and data addressed to the mobile terminal to the newly accessed router, executed by the previously accessed router.

### Effect of the Invention

According to the present invention, in the network-based IP mobility protocol, when the mobile terminal (MN) has moved to another network, the control apparatus (LMA) transmits information on the newly accessed router (MAG) to the previously accessed router (MAG) of the mobile terminal so that the previously accessed router transmits header compression information (ROHC information) used in data transmission and reception with the mobile terminal, to the newly accessed router, and the newly accessed router holds the header compression information, whereby it is possible to effect handover while maintaining the ROHC status.

Further, the control apparatus sends the information on the newly accessed router to the previously accessed router, so that the previously accessed router creates a tunnel when transmitting header compression information to the newly accessed router, whereby the data addressed to the motile terminal in the buffer of the previously accessed router can be forwarded to the newly accessed router, hence making it possible to support fast handover at the same time.

Moreover, according to the present invention, the router (MAG) provides Mobile IP proxy functions so that the mobile terminal (MN) in the network-based IP mobility protocol domain does not need to receive a packet such as RR or BU based on the Mobile IP signaling, hence it is possible to suppress unnecessary signaling traffic and inhibit the overhead of the header from become large, in the last one hope which is a narrow band. Further, since the control apparatus (LMA) transmits a forward command notice to the previously accessed router of the mobile terminal so as to forward the communication information (binding cache) on the mobile terminal to be relayed, to the newly accessed router, it is possible to keep communication route-optimized even after movement (handover) of the mobile terminal.

Further, according to the present invention, in the network-basedIPmobility protocol, the router (MAG) provides a Mobile IP proxy function. When the mobile terminal (MN) is handed over, the control apparatus (LMA) transmits information on the newly accessed router to the previously accessed router, and the previously accessed router transmits compression information (ROHC context), MIP BC and a tunnel request to the newly accessed router, whereby it is possible to execute handover while maintaining the ROHC status and the MIP status.

Further, the control apparatus transmits information on the previously accessed router to the newly accessed router, and newly accessed router can give notice of the identifier and address of the router itself to the previously accessed router, whereby it is possible for the previously accessed router to transmit a notice including compression information, MIP BC and a tunnel request to the newly accessed router.

Moreover, this tunnel can also give support for fast handover at the same time. When the offer of creation of this tunnel, ROHC context and MIP BC are combined and transmitted, whereby it is possible to prevent increase of messages in number and is possible to prevent packets from being nested by starting packet forwarding from the control apparatus to the newly accessed router after the buffer was completely forwarded from the previously accessed router of the mobile terminal to the newly accessed router.

### Brief Description of Drawings

[FIG. 1] is a diagram showing a schematic configuration of a network in the first embodiment.
[FIG. 2] is a sequence diagram showing the procedural steps in the first embodiment.
[FIG. 3] is a block diagram showing an MAG configuration in the present invention.
[FIG. 4] is a block diagram showing an LMA configuration in the present invention.
[FIG. 5A-5C] shows one example of header compression information in the first embodiment.
[FIG. 6] is a diagram showing a schematic configuration of a network in the second embodiment.
[FIG. 7] is a sequence diagram showing the procedural steps of the process in the second embodiment.
[FIG. 8A-8B] shows one example of header compression information in the second embodiment.
[FIG. 9A-9D] shows one example of a packet format.
[FIG. 10A-10C] shows one example of a packet format.
[FIG. 11] is a diagram showing a schematic configuration of a network in the first embodiment.
[FIG. 12] is a block diagram showing an MAG configuration.
[FIG. 13] is a block diagram showing an LMA configuration.
[FIG. 14] is a diagram illustrating the initial state of communication in the first embodiment with header examples.
[FIG. 15] is a sequence diagram showing the procedural steps of the process in the first embodiment.
[FIG. 16] is a flow chart showing the procedural steps of a Mobile IP proxy functional process.
[FIG. 17] shows one example of BC.
[FIG. 18] is a sequence diagram showing an example of the procedural steps of the process in the first embodiment.
[FIG. 19] is a diagram showing a schematic configuration of a network in the second embodiment.
[FIG. 20] is diagram showing a communication state in the second embodiment.
[FIG. 21] is a diagram showing addresses in the second embodiment.
[FIG. 22] is a diagram showing BC held by an MAGa at the initial state of the second embodiment.
[FIG. 23] is a sequence diagram showing the procedural steps of the process in the second embodiment.
[FIG. 24] shows one example of routing policy.
[FIG. 25] shows one example of BC.
[FIG. 26] is a sequence diagram when a Proxy Mobile IP scheme is applied to the handover of the second embodiment.
[FIG. 27] is a diagram showing a schematic configuration of a network in the present invention.
[FIG. 28] is a block diagram showing an MAG configuration in the present invention.
[FIG. 29] is a block diagram showing an LMA configuration in the present invention.
[FIG. 30] is a sequence diagram showing the procedural steps of an initial Mobile IP proxy functional process executed by an MAG.
[FIG. 31] shows one example of a database for a network-based IP mobility protocol.
[FIG. 32] is a flow for determining a provision of an MIP proxy function in the present invention.
[FIG. 33A] is one example of BC, 33B to 33E showing one example of ROHC context.
[FIG. 34] shows examples of packet formats in the present invention.
[FIG. 35A-35D] shows examples of packet formats in the present invention.
[FIG. 36] is a sequence diagram when handover is executed in the present invention.
[FIG. 37] is a sequence diagram when handover is executed in the present invention.
[FIG. 38] is a sequence diagram when handover is executed in the present invention.
[FIG. 39A-39C] shows one example of data associated with a NetLMM-MNa, stored in the storage of an MAG.
[FIG. 40A-40D] shows an example of packet formats in the present invention.
[FIG. 41] is a sequence diagram showing the procedural steps of the process in a conventional fast handover technique.
[FIG. 42] is a sequence diagram showing the procedural steps of the process of a handover technique in a conventional network-based IP mobility protocol.
[FIG. 43] is a sequence diagram showing the procedural steps of a handover process based on a Proxy Mobile IP scheme of a conventional network-based IP mobility protocol. Description of Reference Numerals

- 1,21,23: MN
- 2,3,4,22,24: MAG
- 5,25,26: LMA
- 6,9: CN
- 7: Internet
- 8: Router
- 10: AAA server
- 11,12,17: Communication means
- 13,18: Network-based IP mobility protocol processor
- 14,19: Storage
- 15: Temporary storage
- 16: Compression and extension processor
- 101,122,123: NetLMM-MN
- 102,103,121,125: MAG
- 104,132,133: HA
- 105,130: MIP-MN
- 106,127,128,131: Router
- 107,129: Internet
- 108,124: LMA
- 111,112,116,117: Communication means
- 113,118: Network-based IP mobility protocol processor
- 114: Mobile IP proxy processor
- 115,119: Storage
- 126: MCoA-MN
- 201,205: NetLMM-MN
- 203: Internet/WAN/CoreNetwork
- 204: MIP-MN
- 207: LMA
- 208: HA
- 209: Router
- 211,218: Tunneling processor
- 212: Mobile IP processor
- 213: Header compression and extension processor
- 214,219: Storage
- 215,220: Network-based IP mobility protocol processor
- 216,217,221,222: Communication means
- 223: NetLMM domain
- 231: AAA server

### Best Mode for Carrying Out the Invention

The embodiments of the present invention will be described with reference to the illustrated examples.

### [The first embodiment]

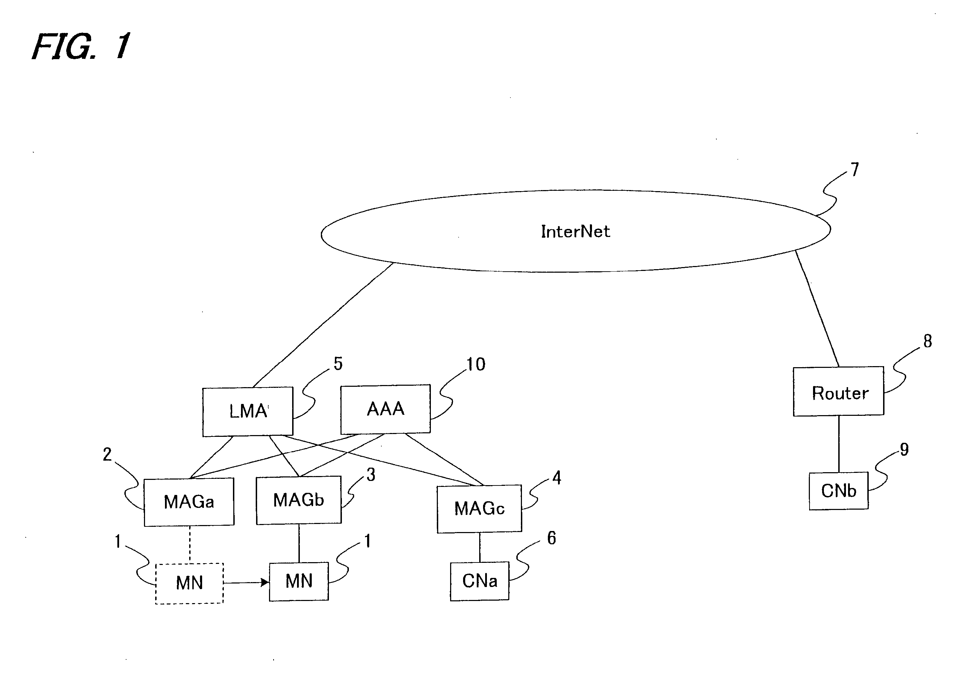

FIG. 1 is a diagram showing a schematic configuration of a network in the present embodiment.

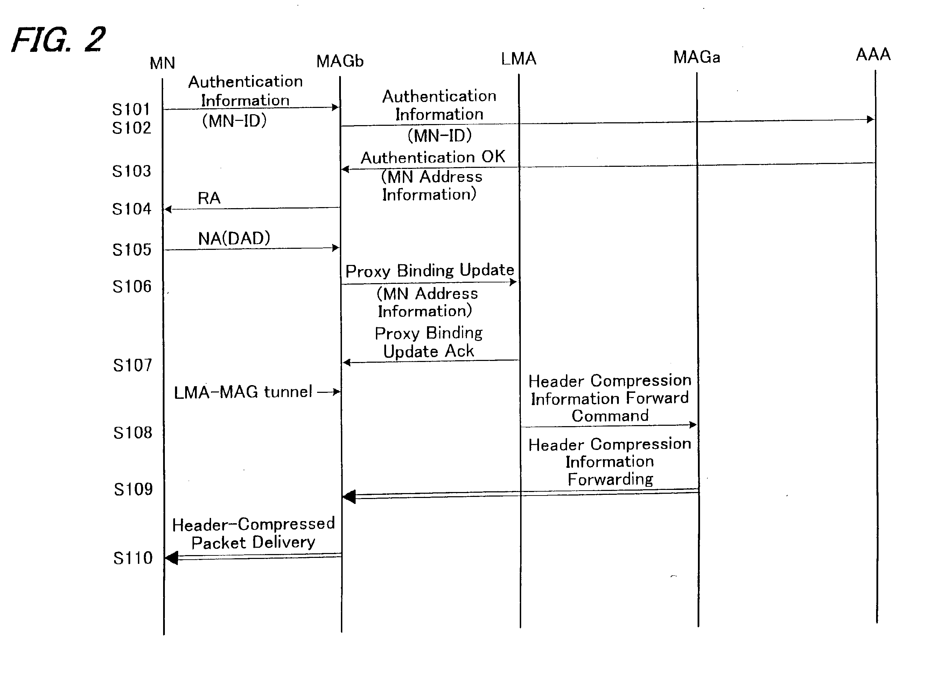

FIG. 2 is a sequence diagram showing the procedural steps in the present embodiment.

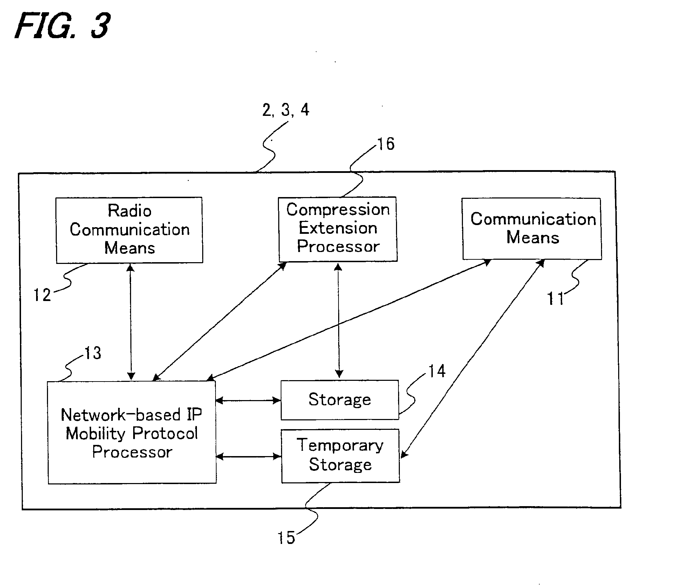

FIG. 3 is a block diagram showing an MAG configuration in the present embodiment.

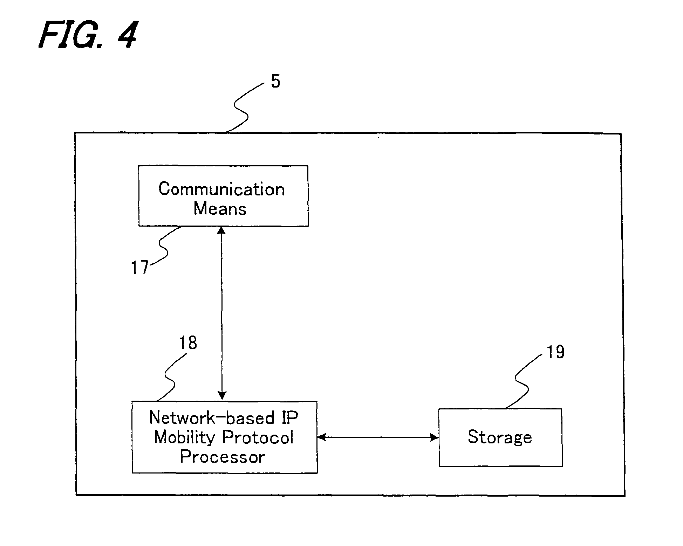

FIG. 4 is a block diagram showing an LMA configuration in the present embodiment.

As shown in FIG. 1, initially, MN 1 is located under the control of an MAGa 2. It is also assumed that MAGa 2, an MAGb 3 and an MAGc 4 are allocated under the control of a common LMA 5. It is assumed that MN 1 communicates with a CNa 6 located on the link of MAGc 4 under common LMA 5 and also communicates with a CNb 9 via Internet 7, a router (Router) 8.
Further, MAGa 2, MAGb 3 and MAGc 4 are connected to an AAA server 10 that executes authentication etc. in a Proxy Mobile IP scheme.
It is assumed that MN 1 transfers from the control of MAGa 2 to the control of MAGb 3 as the MN moves.
The present embodiment will be described on the assumption that handover based on a Proxy Mobile IP scheme is executed.

Hereinbelow, the MAG in FIG. 3 and the MAG in FIG. 4 will be described.
As shown in FIG. 3, MAGs 2, 3 and 4 are configured by inclusion of: a communication means 11 that communicates with an LMA 5 and an AAA server 10 and makes communication by wire such as a LAN (Local Area Network), the Internet or the like; a radio communication means 12 that communicates with MN 1 by wireless; a network-based IP mobility protocol processor 13 that performs control as to network-based IP mobility protocols; a storage 14 made of a database section and a temporary storage 15 capable of temporarily storing; and a compression and extension processor 16.

As shown in FIG. 4, LMA 5 is also configured by inclusion of a communication means 17, a network-based IP mobility protocol processor 18 and a storage 19.

Next, the processing flow of the present embodiment will be described with reference to the sequence diagram of FIG. 2.

First, at S101, MN 1, after its movement to and under the control of MAGb 3, transmits authentication information at least including MN-ID, the identifier of MN 1, to MAGb 3 or the link local multicast address.

Network-based IP mobility protocol processor 13 of MAGb 3, having received the authentication information from ratio communication means 12, stores MN-ID into storage 14 and produces authentication information at least including MN-ID and MAGb-ID, the identifier of MAGb 3, and transmits the authentication information to AAA server 10 from communication means 11, at S102.

AAA server 10 having received the authentication information, checks the validity of MN 1's network participation at S103. If the validity is OK, AAA server 10 searches the database held in itself or held by another node on the network, for MN 1's address information, based on the MN-ID as a key and transmits authentication OK including the address information to MAGb 3.

Then, network-based IP mobility protocol processor 13 of MAGb 3 having received the authentication OK from communication means 11, extracts the MN' s address information included in the authentication OK and transmits RA from radio communication means 12 to MN 1.

MN 1 having received the RA from MAGb 3 transmits NA to the link, following the DAD sequence, at S105.

Network-based IP mobility protocol processor 13 of MAGb 3 receives the NA from MN 1, then, at S106, produces Proxy Binding Update including address information such as the prefix of the MN 1's IP add ress, the MN1's IP address or the like and the MAGb 3's IP address, and transmits the Proxy Binding Update from communication means 11 to LMA 5. Though it was assumed that creation and transmission of Proxy Binding Update is effected after the reception of NA, the creation and transmission is feasible as long as the authentication OK has been given, hence the order may be permuted.

Next, network-based IP mobility protocol processor 18 of LMA 5, having received the Proxy Binding Update from MAGb 3 via communication means 17, stores the MN 1's address information and the MAGb 3' s IP address included in the Proxy Binding Update, into storage 19 in an associated manner, encapsulates the packet that matches the MN 1's address information with the MAGb 3's IP address to set up for transmitting the packet to MAGb 3. Further, when the above setup is completed, network-based IP mobility protocol processor 18 transmits Proxy Binding Update Ack to MAGb 3 from communication means 17 at S107.

Network-based IP mobility protocol processor 13 of MAGb 3 having received the Proxy Binding Update Ack by way of communication means 11, encapsulates the packet from MN 1 with the LMA 5's IP address to set up for transmission to LMA 5. The aforementioned encapsulation setup at LMA 5 and this encapsulation setup at MAGb 3 complete bidirectional encapsulation, establishing LMA-MAG tunneling.

Network-based IP mobility protocol processor 18 of LMA 5 having transmitted Proxy Binding Update Ack from communication means 7 to MAGb 3, transmits to MAGa 2, a header compression information forward command or the message for commanding forwarding of compression information of the header, at least including the identifier of MAGb 3, MAGb-ID or the MAGb 3's IP address, and the identifier of the MN, MN-ID, at S108.

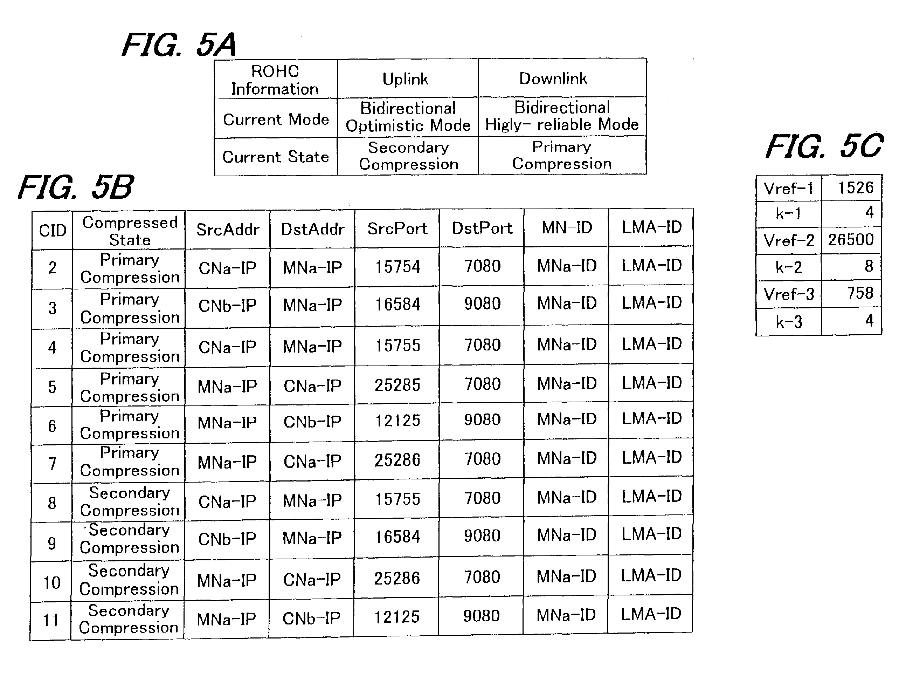

FIGS. 5A-5C are a diagram showing a configurational example of header compression information (ROHC information) held at storage 14 of MAGb 3.
FIG. 5A shows data as to the states and modes in ROHC, FIG. 5B showing ROHC context and FIG. 5C showing one example of stored data such as sequence numbers, etc.

Network-based IP mobility protocol processor 13 of MAGa 2 having received the header compression information forward command from LMA 5, if receives MAGb-ID, discriminates from MAGb-ID, the header compression information on the packet addressed to MN 1, which is identified from MN-ID as shown in FIGS. 5A-5C, and forwards the header compression information to the IP address of MAGb 3.

This header compression information is the information necessary for executing ROHC, including important information for mapping between the ROHC header and non-compressed header. This information is considered to include information such as the current mode, state, CID, W-LSB parameter, source address, destination address, source port, destination port, MN-ID, LMA-ID, etc. At this time, in MAGa 2, the header compression information on MN 1 is deleted from storage 14.

Network-based IP mobility protocol processor 13 of MAGb 3 having received the header compression information from MAGa 2, stores the header compression information into storage 14.

Then, at and after S110, network-based IP mobility protocol processor 13 of MAGb 3 outputs packets to compression and extension processor 16, compression and extension processor 16 compresses the IP/UDP/RTP header based on the compression information in storage 14 as shown in FIGS. 5A-5C and network-based IP mobility protocol processor 13 starts packet delivery from radio communication means 12 to MN 1.

Further, when having received a header-compressed packet from MN 1 by way of radio communication means 12, network-based IP mobility protocol processor 13 of MAGb 3 outputs the packet to compression and extension processor 16, and compression and extension processor 16 can extend the header of the packet, and transfer the packet to LMA 5.

With the above configuration, it is possible to compress and decompress the header even when the compressor for downlink packets (from the communication partner to the MN) and the decompressor for uplink packets (from the MN to the communication partner) are switched over as the link to which MN 1 belongs changes from MAGa 2 to MAGb 3 with the movement of MN 1.

Though the present embodiment was described in a Proxy Mobile IP scheme, the same effect can be obtained when the procedure of authentication by the AAA server is omitted and the scheme based on the first network-based IP mobility protocol, which was described in the prior art, is adopted and executed.

### [The second embodiment]

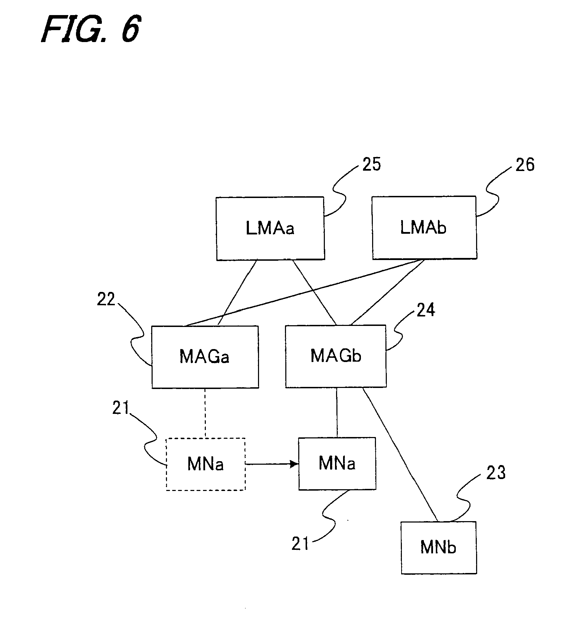

FIG. 6 is a diagram showing a schematic configuration of a network in the present embodiment.

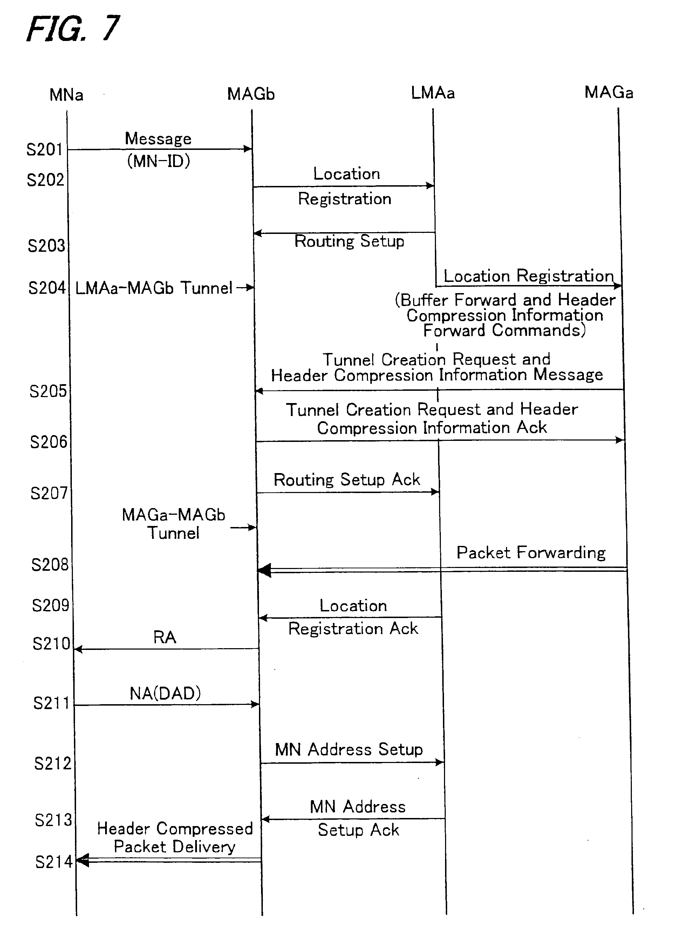

FIG. 7 is a sequence diagram showing the procedural steps of the process in the present embodiment.

As shown in FIG. 6, initially, an MNa 21 is located under the control of an MAGa 22. It is assumed that with movement of MNa 21, MNa 21 transfers from the control of MAGa 22 to and under the control of an MAGb 24 where an MNb 23 has been already present. Also, at this time, LMAa 25 controls movement of MNa 21 while LMAb 26 controls movement of MNb 23.

Next, the processing flow of the present embodiment will be described with reference to the sequence diagram of FIG. 7.
First, at S201, MNa 21 transmits a message at least including MNa-ID, the identifier of MNa 21 and LMAa-ID, the ID of LMAa 25 that controls movement of the MN, to MAGb 24 or the link local multicast address.

Network-based IP mobility protocol processor 13 of MAGb 24, having received the message from MNa 21 , transmits location registration at least including MNa-ID and MAGb-ID, the identifier of MAGb 24 to LMAa 25, at S202.

Next, network-based IP mobility protocol processor 18 of LMAa 25 having received the location registration from MAGb 24, extracts MNa-ID included in the location registration and searches the data held in storage 19 of LMAa 25 for the current state of MNa 21 based on this MNa-ID as a key. Network-based IP mobility protocol processor 18 grasps that the data shows MNa 21 belonging to MAGa 22. As receiving the location registration from MAGb 24, network-based IP mobility protocol processor 18 of LMAa 25 recognizes that MNa 21 has moved, though the data shows that MNa 21 is currently belonging to MAGa 22.

Upon this,atS203,network-basedIPmobility protocol processor 18 of LMAa 25 transmits routing setup at least including LMAa-ID, the identifier of LMAa 25 and the global address of MNa for preparation of an LMAa-MAGb tunnel, to MAGb 24.

Further, at S204, network-based IP mobility protocol processor 18 of LMAa 25 transmits a buffer forward and header compression information forward command at least including MNa-ID, the identifier of MNa 21 and MAGb-ID, the identifier of MAGb 24 or IP address, to MAGa 22. This buffer forward and header compression information forward command may be included in the location registration as shown in FIG. 7, that is, in the message for deleting the LMAa 25-MAGa 22 tunnel which was needed up to now, or may be transmitted separately. After this header compression information is transmitted to MAGb 24, network-based IP mobility protocol processor 13 of MAGa 22 deletes the header compression information associated with MNa 21 from storage 14.

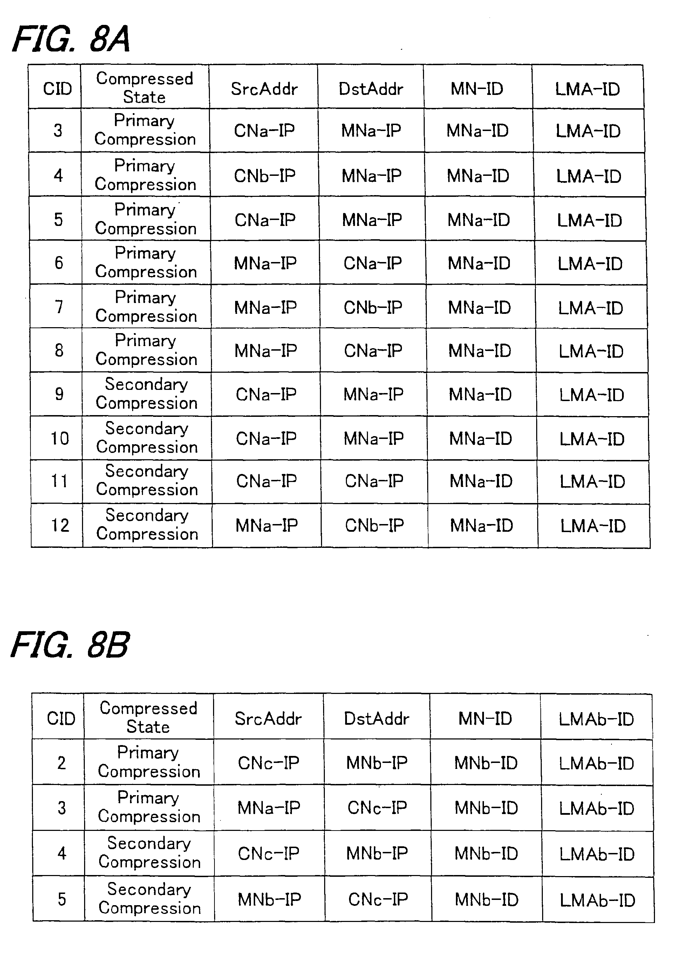

FIGS. 8A-8B show one example of header compression information. FIG. 8A shows an example of header compression information for MNa 21 and FIG. 8B shows that for MNb 23.

Network-based IP mobility protocol processor 13 of MAGa 22 having received the buffer forward and header compression information forward command from LMAa 25, by reading out from storage 14, transmits a tunnel creation request and header compression information message at least including MAGa-ID and MNa-ID and header compression information as shown in FIG. 8A, to MAGb 24, at S205.

Network-based IP mobility protocol processor 13 of MAGb 24 having received the tunnel creation request and header compression information message from MAGa 22, sets up a tunnel path with MAGa 22, and transmits tunnel creation request and header compression information Ack for confirmation to MAGa 22 at S206, so that packets residing in buffer (temporary storage) 15 in MAGa 22 and addressed to MNa 21 can be forwarded to MAGb 24. The tunnel path is realized by IPv6 in IPv6 encapsulation by assigning the IP address of MAGb 24 to the outer destination address and the IP address of MAGa 22 to the outer source address. Further, network-based IP mobility protocol processor 13 of MAGb 24 stores the received header compression information into storage 14.

Network-based IP mobility protocol processor 13 of MAGb 24 having received the routing setup, sets up a tunnel path between LMAa 25 and MAGb 24 and transmits routing setup Ack to LMAa 25.

On the other hand, network-based IP mobility protocol processor 13 of MAGa 22 having received the tunnel creation request and header compression information Ack, starts forwarding the packets addressed to MNa 21 that are identified from MNa-ID, to the IP address of MAGb 24 that is identified from MAGb-ID, at S208.

Network-based IP mobility protocol processor 18 of LMAa 25 having received the routing setup Ack from MAGb 24, transmits location registration Ack, at least including the prefix of MNa 21, to MAGb 24, at S209.

Network-based IP mobility protocol processor 13 of MAGb 24 having received the location registration Ack from LMAa 25, transmits RA to MNa 21 based on the aforementioned prefix information, at S210.

MNa 21 having received the RA from MAGb 24 transmits NA to the link, following the DAD procedures, at S211.

Network-based IP mobility protocol processor 13 of MAGb 24, after receiving this NA from MNa 21, transmits MN address setup including MAGb-ID, the address of MNa 21 and MNa-ID to LMAa 25 at S212. Network-based IP mobility protocol processor 18 of LMAa 25 transmits MN address setup Ack for confirmation to MAGb 24 at S213.

At and after S214, network-based IP mobility protocol processor 13 of MAGb 24 outputs the packets including forwarded packets from MAGa 22 to compression and extension processor 16. Compression and extension processor 16 compresses the header by referring to the compression information in storage 14, and network-based IP mobility protocol processor 13 starts packet delivery from radio communication means 12 to MNa 21.

On the other hand, when receiving a header-compressed packet from MNa 21, network-based IP mobility protocol processor 13 of MAGb 24 outputs the packet to compression and extension processor 16. Compression and extension processor 16 extends the header of the packet so that the packet can be forwarded to LMAa 25.

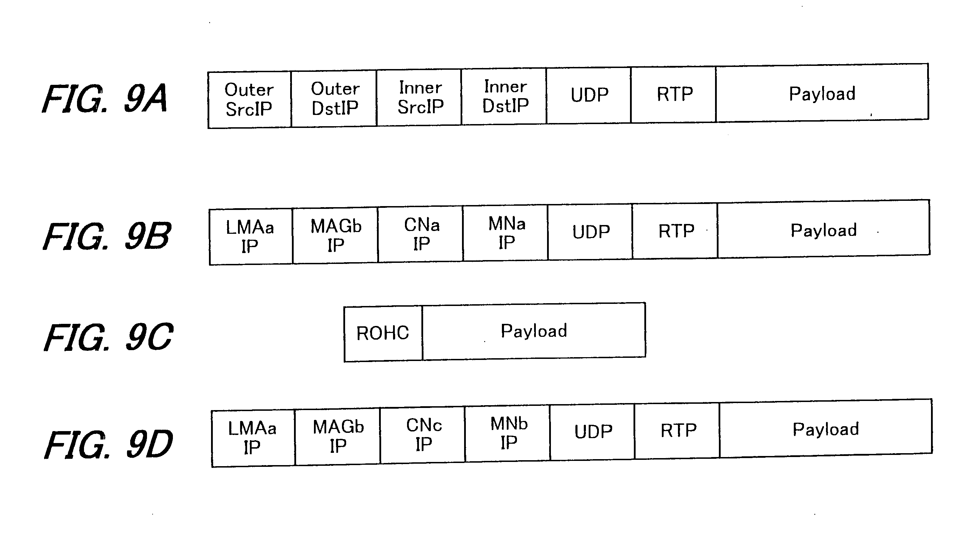

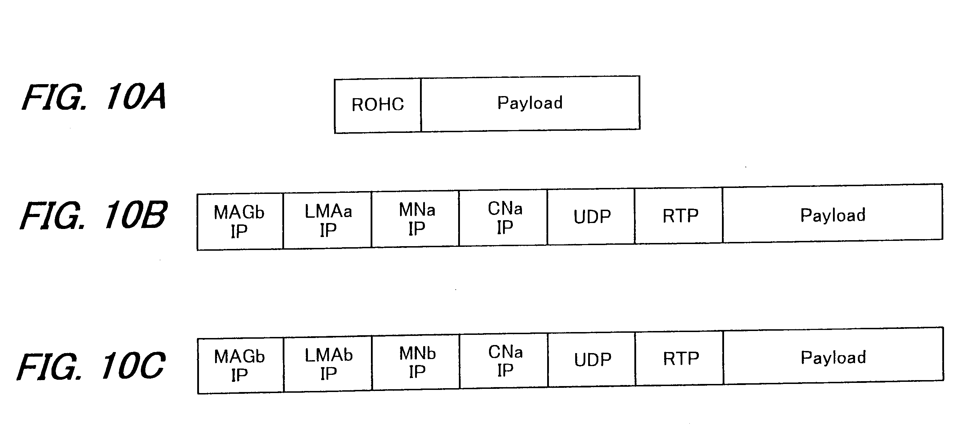

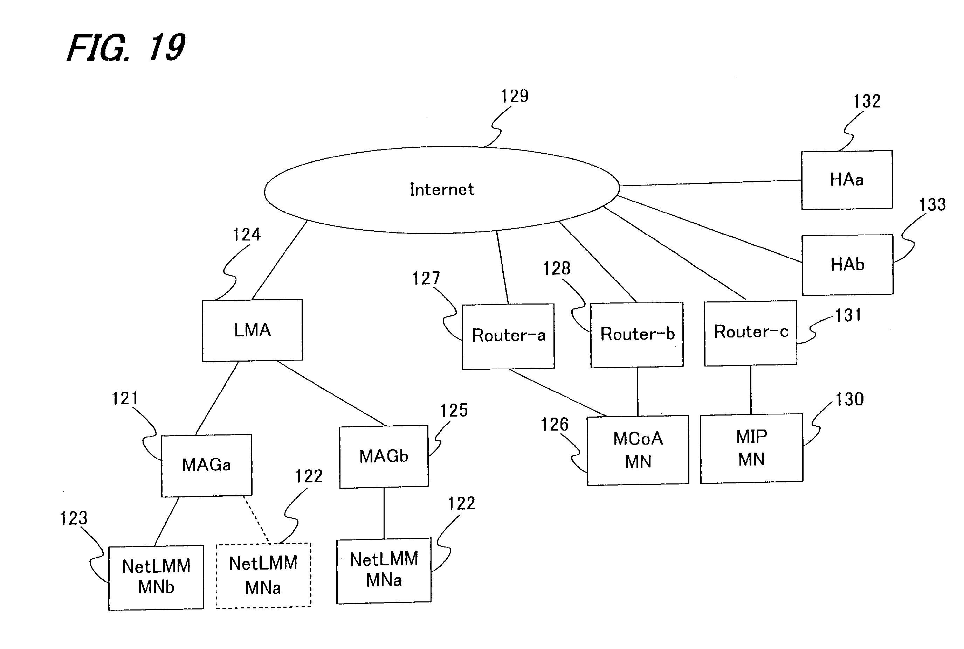

FIGS. 9 and 10 are diagrams showing the examples of packet formats. Herein, the packets in FIGS. 9 and 19 are illustrated by leaving out various fields, so that the actual packets are different from these formats. FIG. 9A is one that shows an assortment of fields in a packet before header compression.
As shown in FIG. 9A, the packet is comprised of an outer source address (Outer Src IP), an outer destination address (Outer Dst IP), an inner source address (Inner Src IP), an inner destination address (Inner Dst IP), an UDP, an RTP and a payload as the data body.

When the present invention is applied, the packet directed to the MN has the Inner Dst IP address of "MNaIP", as shown in FIG. 9B, so that the MN to which the MAG wants to send can be identified.

As a result, when a packet as shown in FIG. 9B has arrived, compression and extension processor 16 of the MAG can compress the header by creating the ROHC header as in FIG. 9C by referring to the data in storage 14 as shown in FIG. A, and the MAG can recognize that the packet should be delivered to MNa 21, hence it is possible to correctly deliver the packet to MNa 21.

When a packet as in FIG. 9D has arrived, compression and extension processor 16 of the MAG creates the ROHC header by referring to the compression information as in FIG. 8B for MNb 23 residing in storage 14, to deliver the packet to MNb 23.

Further, in the MAG, as to a packet from an MN, radio communication means 12 can grasp the MN from which the packet was sent, based on the bearer information such as, for example the MAC address etc. As a result, when receiving a packet as in FIG. 10A from MNa 21, the MAG can expand the IP/UDP/RTP header as shown in FIG. 10B by referring to the compression information as in FIG. 8A for MNa 21 in storage 14 and recognize that the destination is LMAa 25, so that the packet can be transmitted to LMAa 25.

Further, when a packet as in FIG. 10A has arrived from MNb 23, compression and extension processor 16 of the MAG can extend the picket as shown in FIG. 10C by referring to the compression information as in FIG. 8B for MNb 23 residing in storage 14 and recognize that the destination is LMAb 26, so that the packet can be transmitted to LMAb 26.

The present embodiment was described by explaining the case where LMAa 25 gives a buffer forward and header compression information forward command to MAGa 22, and a tunnel creation offer from MAGa 22 to MAGb 24 and header compression information are inserted into the same message so as to efficiently give notice of tunneling for buffer forwarding and header compression information. As a result, the packets addressed to MNa 21 and pooled in the buffer of MAGa 22 can be forwarded by way of MAGb 24, and MAGb 24 can obtain the header information, hence it is possible to deliver packets with the header compressed to MNa 21 without any packet loss even after handover.

### [The third embodiment]

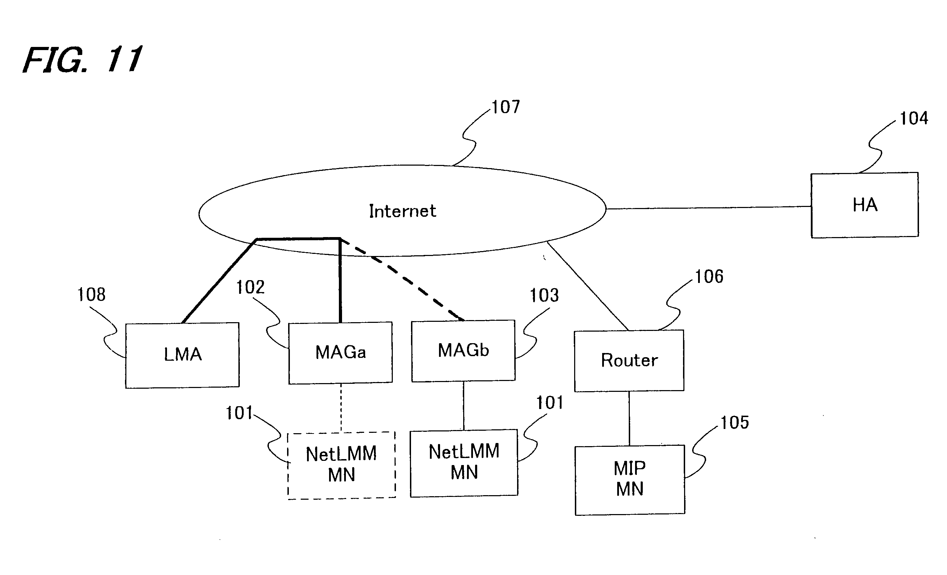

FIG. 11 is a diagram showing a schematic configuration of a network in the present embodiment.

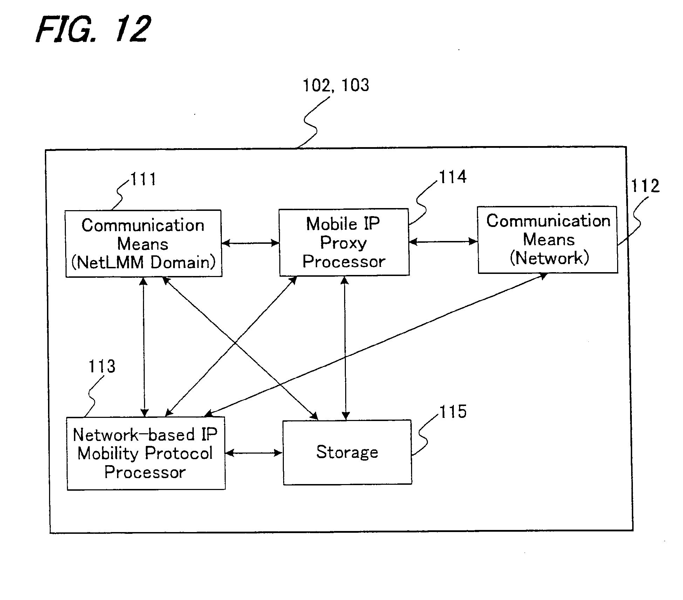

FIG. 12 is a block diagram showing an MAG configuration in the present embodiment.

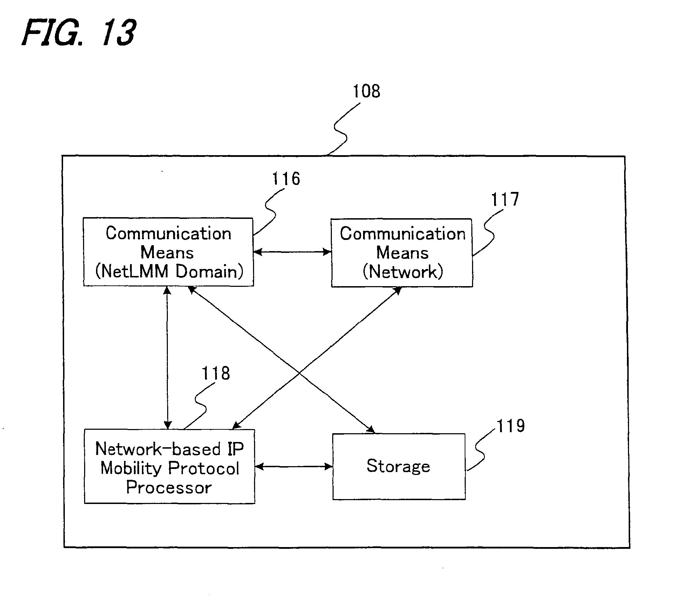

FIG. 13 is a block diagram showing an LMA configuration in the present embodiment.

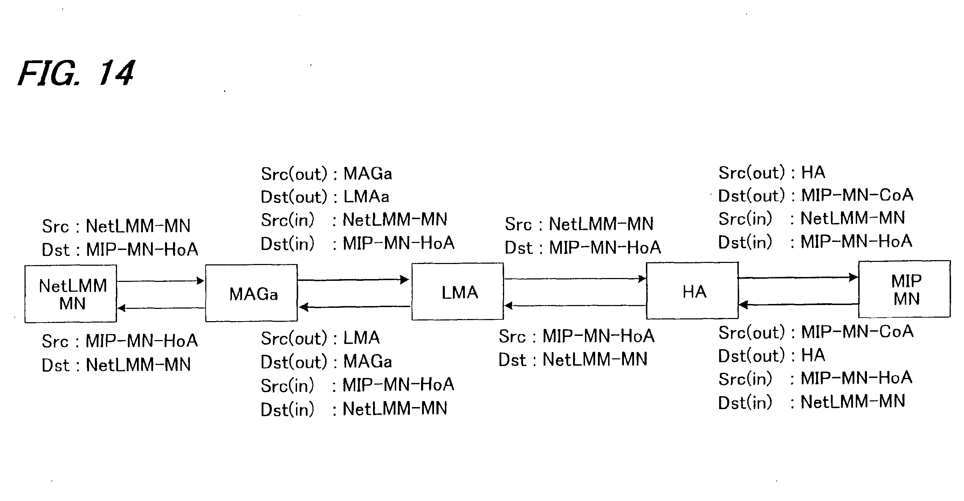

FIG. 14 is a diagram illustrating the state of communication at the initial state in the present embodiment with header examples.

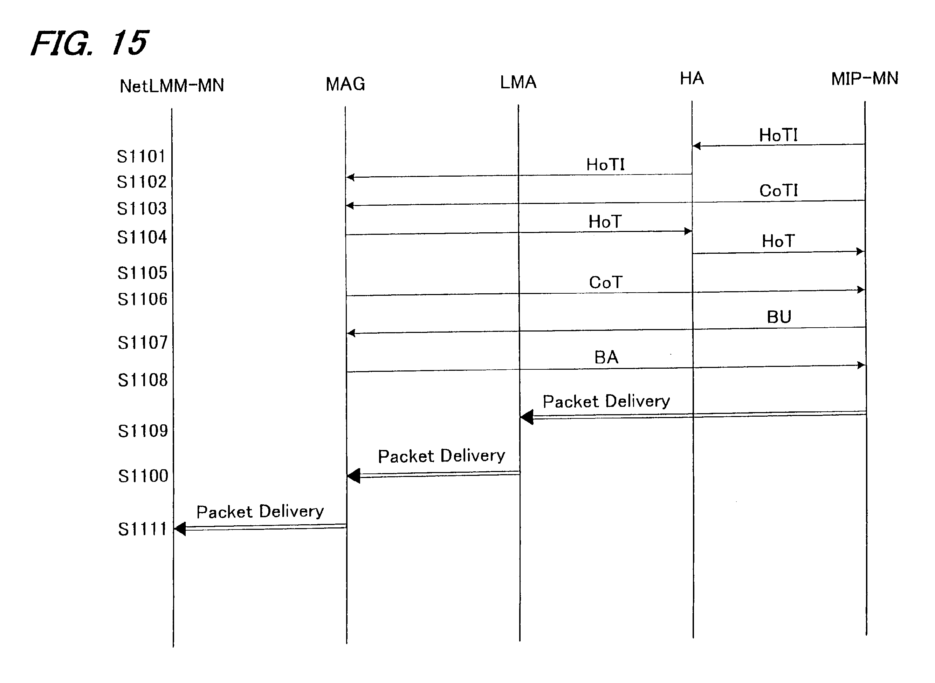

FIG. 15 is a sequence diagram showing the procedural steps of the process in the present embodiment.

As shown in FIG. 11, the present embodiment will be described on the assumption that a NetLMM-MN 101 (mobile terminal using a network-based IP mobility protocol) is initially located on the link of MAGa 102 and moves to the link of an MAGb 103.

Hereinbelow, the MAG in FIG. 12 and the LMA in FIG. 13 will be described.
As shown in FIG. 12, MAGs 102 and 103 are configured by inclusion of a NetLMM communication means 111, a Network communication means 112, a network-based IP mobility protocol processor 113 for making control as to the network-based IP mobility protocol, a Mobile IP proxy processor 114 for performing proxy functions as to Mobile IP and a storage 115 made of a database section and a temporary storage capable of temporarily storing.

As shown in FIG. 13, an LMA 108 is configured by inclusion of a NetLMM communication means 116, a Network communication means 117, a network-based IP mobility protocol processor 118 for making control as to the network-based IP mobility protocol and a storage 119 made of a database section and a temporary storage capable of temporarily storing.

A NetLMM-MN 101, when it is controlled by MAGa 102, starts communication with an MIP-MN 105 (which is located on the link of a Router 106, the link that is not controlled at present by an HA 104, i.e., a foreign link (external link)) that is controlled as to movement by HA 4, via Internet 107. Here, it is assumed that the processing between MAGa 102 and LMA 108 has been ended, and a tunnel between MAGa 102 and LMA 108 for NetLMM-MN 101 has been set up.

When communication between NetLMM-MN 1 and MIP-MN 105 starts, the communication is initially executed by way of HA 104.
That is, as shown in FIG. 14, communication between NetLMM-MN 101 and MAGa 102 is executed in normal IPv6 with NetLMM-MN 101 set as the source address and the HoA of MIP-MN 105 set as the destination address.

Further, because of the tunnel setup, communication between MAGa 102 and LMA 108 is executed in such a manner that network-based IP mobility protocol processors 113 of MAGa 102 and 118 of LMA 108 add MAGa 102 and LMA 108' s addresses as the addresses of the outer header of the packet.

Further, communication between LMA 108 and HA 104 is executed in normal IPv6 by removing the outer header.

Next, communication between HA 104 and MIP-MN 105 is performed by Mobile IP tunnel setup in such a manner that the addresses in the outer header are set with HA 104 and CoA of MIP-MN 105.

When communication between MIP-MN 105 and NetLMM-MN 101 starts, in order to perform route optimization MIP-MN 105 initially transmits HOTI and COTI to NetLMM-MN 101 at S1101, S1102 and S1103.

The packets addressed to NetLMM-MN 101, HOTI and COTI, reach MAGa 102 by way of HA 104 and LMA 108 and by way of LMA 108, respectively.

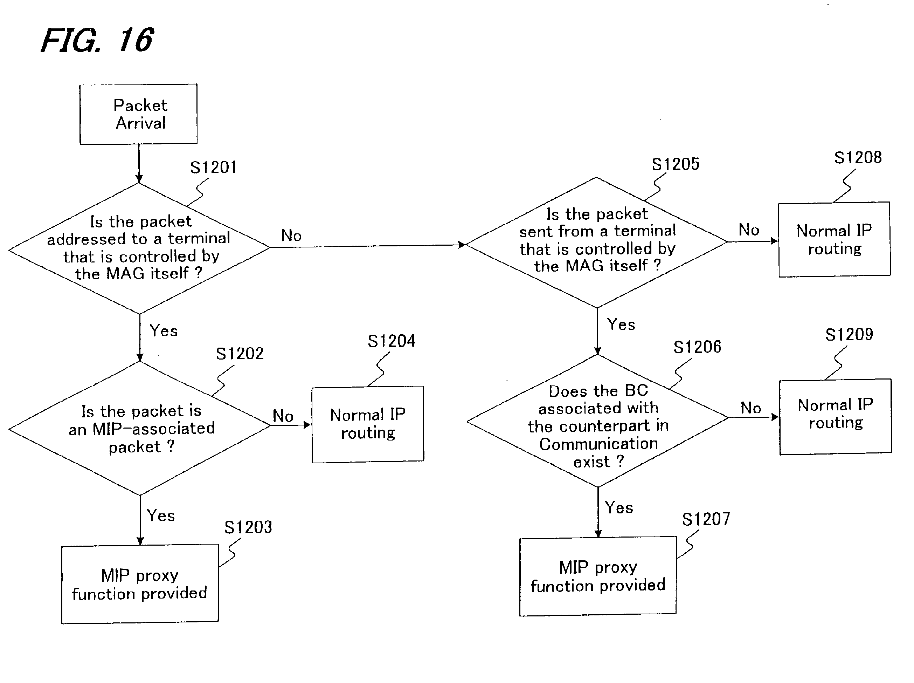

FIG. 16 is a flow chart showing the procedural steps of a Mobile IP proxy functional process in MAGs 102 and 103.
The HOTI and COTI are received by communication means 112 of MAGa 102, and these packets are output to Mobile IP proxy processor 114. Mobile IP proxy processor 114 of MAGa 102 determines whether a Mobile IP proxy functional process should be done, following the flow chart shown in FIG. 16.

First, S1201, Mobile IP proxy processor 114 determines whether it is addressed to a terminal that is controlled by the MAG itself. The operation goes to the process at S1202 if the answer is "Yes" at S1201, and goes to the process at S1205 if the answer is "No".

At S1202, Mobile IP proxy processor 114 determines whether the received packet is an MIP-associated packet. If the answer is "Yes" at S1202, Mobile IP proxy processor 114 performs an MIP proxy process at S1203.

If the answer is "No", Mobile IP proxy processor 114 executes normal IP routing at S1204.

Further, if the answer is "No" at S1201, Mobile IP proxy processor 114 goes to the procedure at S1205 and determines whether it was sent from a terminal that is controlled by the MAG itself.

If the answer is "No" at S1205, Mobile IP proxy processor 114 executes normal IP routing at S1208.

If the answer is "Yes" at S1205, Mobile IP proxy processor 114 makes search to check whether storage 115 holds the BC associated with the communication partner, at S1206.

If the answer is "No" at S1206, Mobile IP proxy processor 114 executes normal IP routing at S1209.

If the answer is "Yes" at S1206, Mobile IP proxy processor 114 offers an MIP proxy function at S1207.

In this case, since the received HOTI and COTI are addressed to NetLMM-MN 1, Mobile IP proxy processor 114 determines to give "Yes" at S1201 and the operation goes to S1202. Mobile IP proxy processor 114 determines that these packets are MIP-associated packets, hence gives "Yes" at S1202, and the operation goes to S1203, where it is determined that a Mobile IP proxy functional process is executed.

Upon this, instead of NetLMM-MN 1, Mobile IP proxy processor 114 produces HOT for HOTI and COT for COTI by assigning the address of NetLMM-MN 101 to the source address, and transmits HOT by way of LMA 108 and HA 104 at S1104 and S1105, and COT by way of LMA 108 at S1106, in return to MIP-MN 105.

As receiving the HOT and COT, MIP-MN 105 produces BU based on that information and transmits BU to the address of NetLMM-MN 101 at S1107.

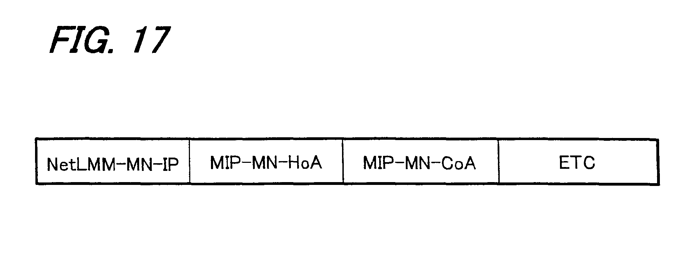

Mobile IP proxy processor 114 of MAGa 2 having received the BU, determines whether a Mobile IP proxy functional process should be done, following the flow of FIG. 16. Herein, Mobile IP proxy processor 114 gives "Yes" at S1201 because the destination address of the BU is NetLMM-MN 101, and gives "Yes" at S1202 because it is an MIP-associated packet, and the operation goes to S1203, where a Mobile IP proxy functional process is determined to be executed. Then, Mobile IP proxy processor 114 of MAGa 102 produces, for example BC as shown in FIG. 17 in storage 115, based on the BU. Since this BC is one for NetLMM-MN 101, the BC is stored in association with the ID or IP address of NetLMM-MN 101.

Further, if necessary, Mobile IP proxy processor 114, in place of NetLMM-MN 101, returns BA (Binding Acknowledgement, which will be referred to hereinbelow as "BA") to MIP-MN 105 at S1108. As a result of these procedures, route optimization for MAGa 102 is executed and the BC is held in storage 115 so that packets with an option header of MIPv6 specifications can be handled.

The packet addressed from MIP-MN 105 to NetLMM-MN 101 after route optimization is attached with a destination options header. MAGa 102 having received this packet by way of LMA 108 determines whether a Mobile IP proxy functional process should be done, following the flow of FIG. 16.

Since this packet is addressed to NetLMM-MN 101, Mobile IP proxy processor 114 gives "Yes" at S1201. Further, since this packet is attached with an options header of MIP specifications, Mobile IP proxy processor 114 gives "Yes" at S1202 and executes the Mobile IP proxy functional process of S1203. This packet is configured such that the source address is the CoA of MIP-MN 105, the destination address is NetLMM-MN-IP and the destination options header is the HoA of MIP-MN 105.

Mobile IP proxy processor 114 compares these pieces of information with the BC that is searched for in storage 115 based on the IP address of NetLMM-MN 101 so as to determine whether the packet is one that is associated with the BC. If the packet satisfies the condition, the headers are replaced. That is, Mobile IP proxy processor 114 shapes the packet into a format similar to that of normal IPv6 headers, by assigning MIP-MN-HoA as the source address and NetLMM-MN as the destination options header and giving no options header, and transfers the packet to NetLMM-MN 101.

The packet addressed from NetLMM-MN 101 to MIP-MN 105 reaches MAGa 102 as a normal IPv6 packet. At this point, MAGa 102 determines whether a Mobile IP proxy functional process should be done, following the flow of FIG. 16.

At S1201, Mobile IP proxy processor 114 determines that this packet is not addressed to NetLMM-MN 101 and the operation goes to the procedure at S1205. At S1205, Mobile IP proxy processor 114 determines that this is a packet from NetLMM-MN 101, so that the operation goes to the procedure at S1206. Then, at S1206, when searching storage 115 based on the IP address of NetLMM-MN 101 as a key, Mobile IP proxy processor 114 finds a BC as shown in FIG. 17, Mobile IP proxy processor 114 executes a Mobile IP proxy functional process at S1207.

In this proxy process, the header of the packet having NetLMM-MN-IP as the source address and MIP-MN-HoA as the destination address is rewritten. That is, the source address uses NetLMM-MN-IP as it is, following MIPv6. Mobile IP proxy processor 114 of MAGa 102 recognizes that the CoA of MIP-MN-HoA is MIP-MN-CoA from the information on the BC in FIG. 17, and stores MIP-MN-CoA as the destination address and MIP-MN-HoA as the routing options header TYPE102, and forwards the packet to Internet 107 by way of LMA 108.

As a result of these procedures, while performing route optimization, NetLMM-MN 101 can make communicationwithMIP-MN 105 without losing the advantage of a network-based IP mobility protocol.

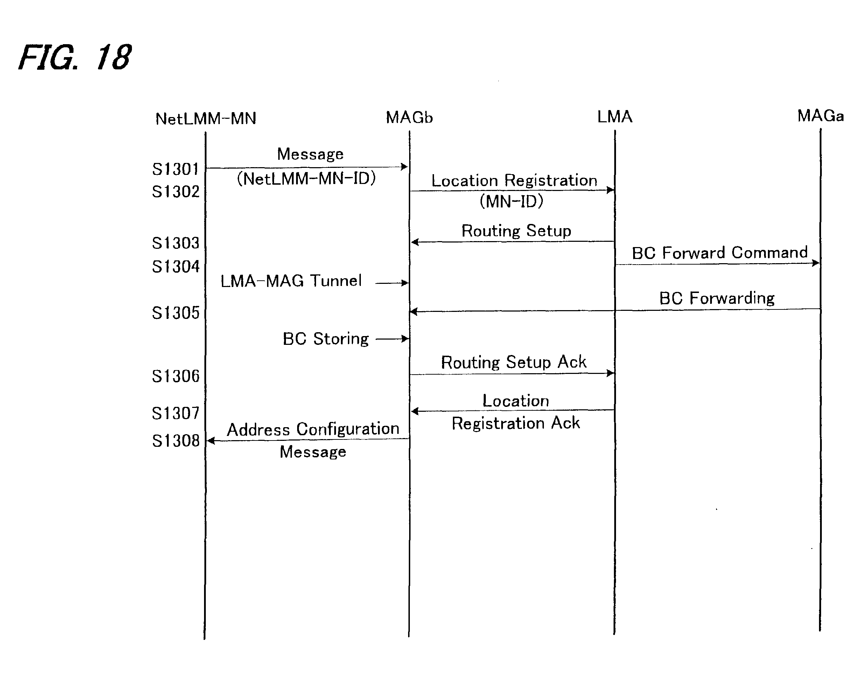

FIG. 18 is a sequence diagram showing an example of the procedural steps of the process after handover in the present embodiment.
An example where NetLMM-MN 101 is handed over from MAGa 2 to MAGb 103 will be described using FIG. 18.

At S1301, NetLMM-MN 101 transmits a message including the identifier of itself or NetLMM-MN-ID, to MAGb 103, following the normal procedures.

At S1302, network-based IP mobility protocol processor 113 of MAGb 103 creates location registration including the NetLMM-MN-ID and transmits the location registration to LMA 108.

Network-based IP mobility protocol processor 118 of LMA 108 having received the location registration transmits routing setup including NetLMM-MN-IP for creating a tunnel to MAGb 103, at S1303. Also, at this time, network-based IP mobility protocol processor 118 of LMA 108 transmits a BC forward command including the ID of the new MAG or MAGb 103 and the ID of NetLMM-MN 101, to MAGa 102 at S1304.

Network-based IP mobility protocol processor 113 of MAGa 102 having received the BC forward command outputs the NetLMM-MN-ID included in the message to Mobile IP proxy processor 114. Mobile IP proxy processor 114 extracts the BC associated with NetLMM-MN 101 in storage 115, based on the NetLMM-MN-ID and outputs the BC to network-based IP mobility protocol processor 113. Network-based IP mobility protocol processor 113 transfers this BC information to MAGb 103 at S1305. Further, Mobile IP proxy processor 114 deletes this BC information from storage 115.

Network-based IP mobility protocol processor 113 of MAGb 103 having received the routing setup from LMA 108 creates a bidirectional tunnel associated with NetLMM-MN-IP between LMA 108 and MAGb 103 and returns routing setup Ack to LMA 108 at S1306.

Network-based IP mobility protocol processor 113 of MAGb 103 having received the BC information from MAGa 102 outputs this information to Mobile IP proxy processor 114. Mobile IP proxy processor 114 stores the BC into storage 115.

Network-based IP mobility protocol processor 118 of LMA 108 having received the routing setup Ack from MAGb 103 returns location registration Ack to MAGb 103 at S1307.

Network-based IP mobility protocol processor 113 of MAGb 103 having received the location registration Ack from LMA 108, transmits a message for configuring the address of NetLMM-MN to NetLMM-MN 101 at S1308. As this message, RA, DHCP-Advtize, DHCP-Reconfigure or the like can be considered.

In the above way, NetLMM-MN 101 establishes a communicable state via MAGb 103.

At and after this, when receiving a packet, Mobile IP proxy processor 114 of MAGb 103, similarly to MAGa 102, executes the process, following the flow of FIG. 16. As a result, Mobile IP proxy processor 114 subjects the options header-attached packet addressed to NetLMM-MN 101 arriving from MIP-MN 105, to a Mobile IP proxy functional process so as to deliver the packet as a normal IPv6 packet to NetLMM-MN 101.

On the other hand, Mobile IP proxy processor 114 subjects a packet received from NetLMM-MN 101 and addressed to MIP-MN-HoA to a Mobile IP proxy functional process by referring to the BC in storage 15 so as to transmit the packet to the address of MIP-MN-CoA by adding an options header of Mobile IPv6 specifications.

In the above way, even when a terminal having MIP functions, MIP-MN 105 and a terminal using a network-based IP mobility protocol, NetLMM-MN 101 make communication, no MIP signaling will reach NetLMM-MN 101 or no options header-attached packet will reach either while communication can be retained with route optimization even if NetLMM-MN 101 is handed over.

### [The fourth embodiment]

The present embodiment will be described taking an example in which a NetLMM-MN that is communicating with two MIP-MNs: one terminal using MultipleCoA, which is a protocol derived from Mobile IP and one usual MIP terminal, is handed over from an MAGa to an MAGb.

Mobile CoA is a protocol that is extended from Mobile IP to realize multihome. An MN of MultipleCoA includes a plurality of communication means and can make access to the Internet from a plurality of networks, and can register a plurality of CoAs to HAs and a CN at the same time. On this occasion, each CoA is registered in BC in association with a BID (Binding ID) assigned to each communication interface on the MN. As a result, the CN can transmit packets to any one of the multiple CoAs of the MN by referring to the BC, and also can verify the matching with HoA based on the BC even though the CN receives packets from any one of CoAs.

FIG. 19 is a diagram showing a schematic configuration of a network in the present embodiment.

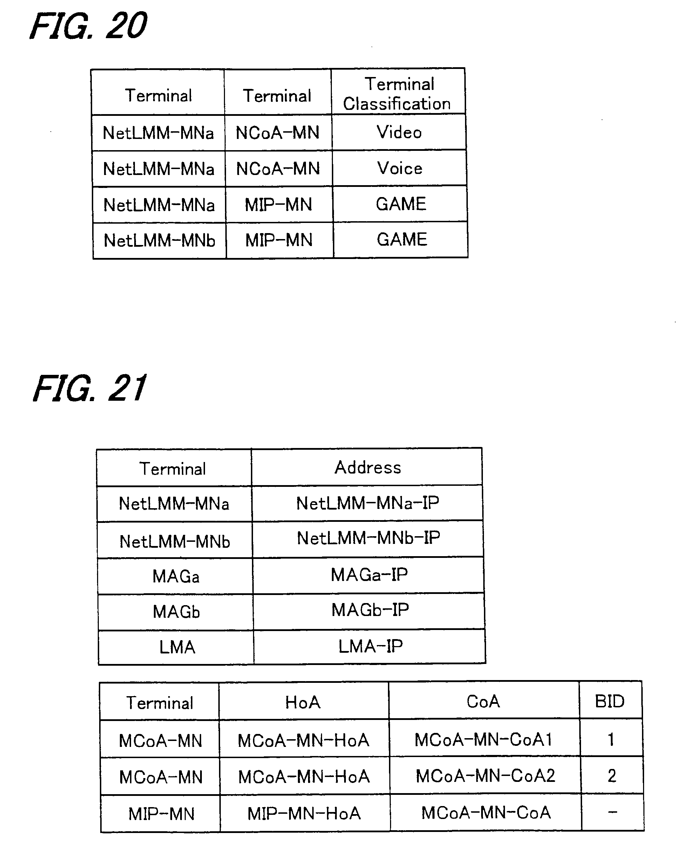

FIG. 20 is diagram showing a communication state in the present embodiment.
FIG. 21 is a diagram showing addresses in the present embodiment.

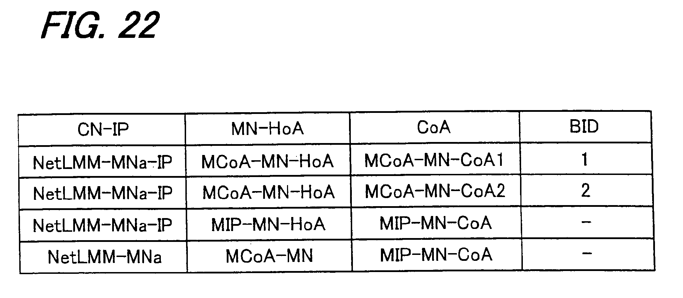

FIG. 22 is a diagram showing BC held by an MAGa at the initial state of the present embodiment.

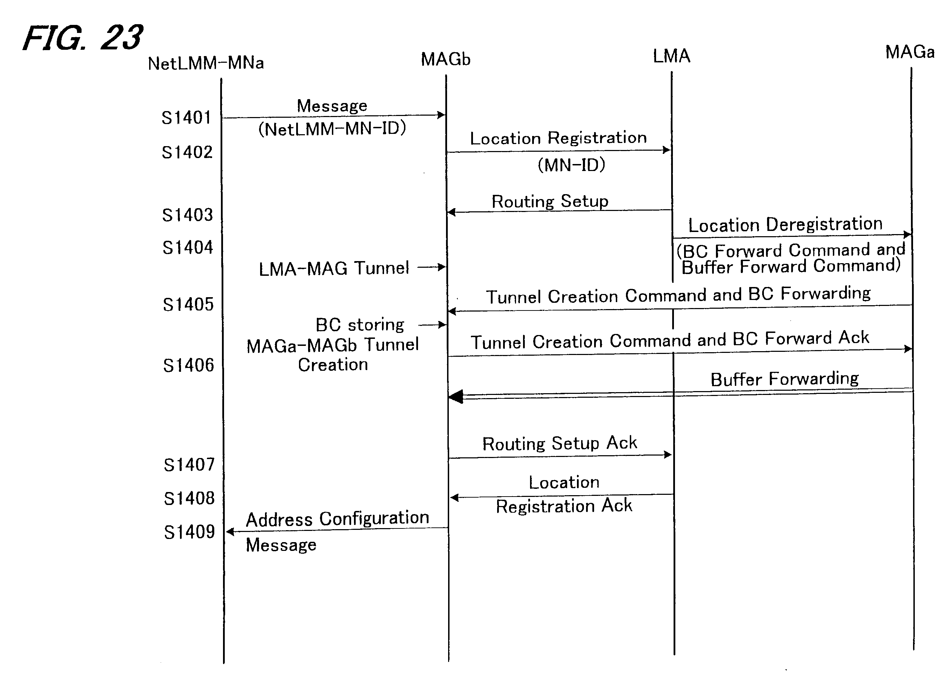

FIG. 23 is a sequence diagram showing the procedural steps of the process in the present embodiment.

The present embodiment will be focused on handover, and description on the part of the MAGa creating BC shown in the first embodiment is omitted.
As shown in FIG. 19, at the initial state, a NetLMM-MNa 122 and NetLMM-MNb 123 are located on the link of an MAGa 121.

An LMA 124 controls MAGa 121 and an MAGb 125. As a Multiple CoA terminal, an MCoA-MN 126 is located on the links of Router-a 127 and Router-b 128 and connected to LMA 124 via Internet 129. Further, an MIP terminal, MIP-MN 130 is located on the link of Router-c 131. As HAs, HAa 132 and Hab 133 exist.

As shown in FIG. 20, NetLMM-MNa 122 is in the state where the NetLMM-MNa communicates with MCoA-MN 126 by videophone,asindicated by classification"Video"and"Voice" while being engaged in a game, as indicated by classification "GAME" NetLMM-MNb 123 is in the state where the NetLMM-MNb is being engaged in a game, as indicated by classification "GAME".
Further, the IP address of each node shown in FIG. 19 is given as shown in FIG. 21.

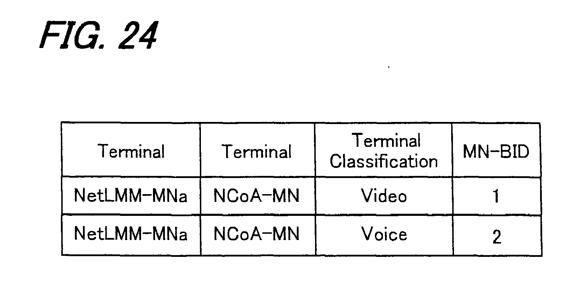

Further, it is assumed that in the initial state, MAGa 121 holds the BC as shown in FIG. 22 and information as in FIG. 24 is held as a routing policy. FIG. 24 describes that in communication between NetLMM-MNa 122 and MCoA-MN 126, BID 101 (i.e., MCoA-MN-CoAl) is used for video data streams and BID 102 (i.e., MCoA-MN-CoA102) is used for voice data streams. That is, the BC relates to IP address information applicable in Layer 3 of the OSI basic reference model while the routing policy describes information on IP addresses actually used with applications.

In the state described above, when NetLMM-MNa 122 is handed over from MAGa 121 to MAGb 125, NetLMM-MNa 122 initially transmits a message including the ID of itself, NetLMM-MNa-ID to MAGb 125 at S1401.

At S1402, network-based IP mobility protocol processor 113 of MAGb 125 transmits location registration including the NetLMM-MNa-ID and the identifier of MAGb 125, MAGb-ID, to LMA 124.

Network-based IP mobility protocol processor 118 of LMA 124 having received the location registration from MAGb 125 transmits routing setup for creating an LMA 124-MAGb 125 tunnel to MAGb 125 at S1403.

Also, at S1401, network-based IP mobility protocol processor 118 of LMA 124 transmits location registration to MAGa 121 which is the link that NetLMM-MNa 122 accessed before movement in order to delete the LMA 124-MAGa 121 tunnel (for NetLMM-MNa 122).

Further, network-based IP mobility protocol processor 118 of LMA 124 transmits a buffer forward command message included with the ID of MAGb 125, MAGb-ID, and the ID of NetLMM-MNa 122, NetLMM-MNa-ID, to MAGa 121 and also transmits a BC forward command message included with the ID of MAGb 125, MAGb-ID and the ID of NetLMM-MNa 122, NetLMM-MNa-ID. These three messages (location registration, buffer forward command and BC forward command) may be transmitted in combination or may be transmitted separately. At this time, routing policy information is also transmitted together with the BC information.

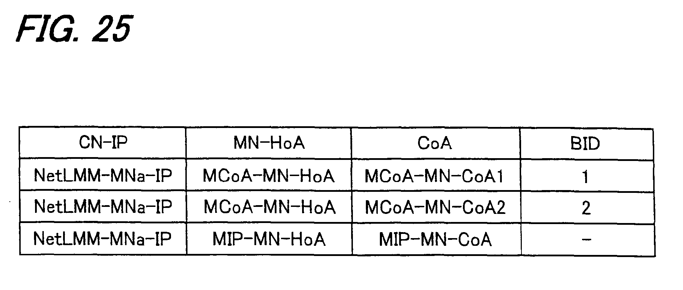

At S1405, network-based IP mobility protocol processor 113 of MAGa 121 having received these messages from LMA 124, transfers information as to the commands to Mobile IP proxy processor 114, and mobile IP proxy processor 114 extracts the BC information as to NetLMM-MNa 122 (part of FIG. 22 and shown in FIG. 25) by referring to storage 115 and outputs the BC information to network-based IP mobility protocol processor 113 to be forwarded to MAGb 125.

Network-based IP mobility protocol processor 113 of MAGa 121 also transmits a tunnel creation request message including MAGa-ID and NetLMM-MNa-ID to MAGb 125. These two messages may be transmitted in combination or may be transmitted separately.

Network-based IP mobility protocol processor 113 of MAGb 125 having received these messages from MAGa 121, outputs the received BC information as to NetLMM-MNa and routing policy to Mobile IP proxy processor 114, and Mobile IP proxy processor 114 stores the BC information and routing policy into storage 115.

Network-based IP mobility protocol processor 113 of MAGb 125 also sets up a tunnel between MAGa 121 and MAGb 125 and transmits a tunnel creation command and BC forward Ack for confirmation to MAGa 121 at S1406.

Since the tunnel setup is completed afterwards, network-based IP mobility protocol processor 113 of MAGa 121 starts to forward the packets addressed to NetLMM-MNa 122 and stored in the buffer to the address of MAGb 125.

Network-based IP mobility protocol processor 113 of MAGb 125 having received the routing setup from LMA 124 sets up a tunnel between LMA 124 and MAGb 125 and transmits routing setup Ack to LMA 124. At S1407.

Network-based IP mobility protocol processor 118 of LMA 124 having received the routing setup Ack from MAGb 125 returns location registration Ack to MAGb 125 at S1408.

Network-based IP mobility protocol processor 113 of MAGb 125 having received the location registration Ack from LMA 124 transmits a message for performing address configuration (address setup) of NetLMM-MNa 122, toNetLMM-MNa at S1409. As this message, RA, DHCP-Advtize, DHCP-Reconfigure or the like may be considered.

In the above way, NetLMM-MNa 122 can continue to communicate even after handover.

MAGb 125 that has been tuned to be able to communicate through the optimized route by possessing the BC as to the MIP terminal will execute processing, following the flow of FIG. 16, similarly to MAGa 121.

As a result, for example Mobile IP proxy processor 114 of MAGb 125 subjects the options header-attached packet that have been received from MIP-MN 130 and addressed to NetLMM-MNa 122, to a Mobile IP proxy functional process to deliver the packet in the form of a normal IPv6 packet to NetLMM-MNa 122.

Further, Mobile IP proxy processor 114 of MAGb 125 executes a Mobile IP proxy functional process for the packets addressed from NetLMM-MNa 122 to MIP-MN-HoA, and adds an options header of Mobile IPv6 specifications and transmits the packets to MIP-MN-CoA.

Mobile IP proxy processor 114 of MAGb 125 subjects the options header-attached packet received from MCoA-MN 126 and addressed to NetLMM-MNa 122 to a Mobile IP proxy functional process to deliver the packet in the form of a normal IPv6 packet to NetLMM-MNa 122.

Further, Mobile IP proxy processor 114 of MAGb 125, when receiving a packet addressed to MCoA-MN-HoA from NetLMM-MNa 122, subjects the packet to a Mobile IP proxy functional process and adds an options header of Mobile IPv6 specifications and transmits the packet for video streams to MIP-MN-CoA-MN-CoA 1 and the packet for voice streams to MIP-MN-CoA-MN-CoA 102.

The Mobile IP proxy process as above can be realized because the BC and routing policy have been transferred from the previously accessed MAG to the newly accessed MAG.

In the above way, also in the embodiment where MIP-MN 130 and MCoA-MN 126 make communication with NetLMM-MNa 122, no MIP signaling will reach NetLMM-MN 122 or no options header-attached packet will reach either, so that it is possible to make efficient use of the last one hop, which is the narrowest band, and communication can be retained under route optimization even if the NetLMM-MN is handed over.

By the way, when the Proxy Mobile IP scheme described as the second network-based IP mobility protocol of the prior art is applied to the present embodiment, the LMA controls MAGs, so that, if the MAGs perform Mobile IP proxy processing, the same effect as described above can be obtained.

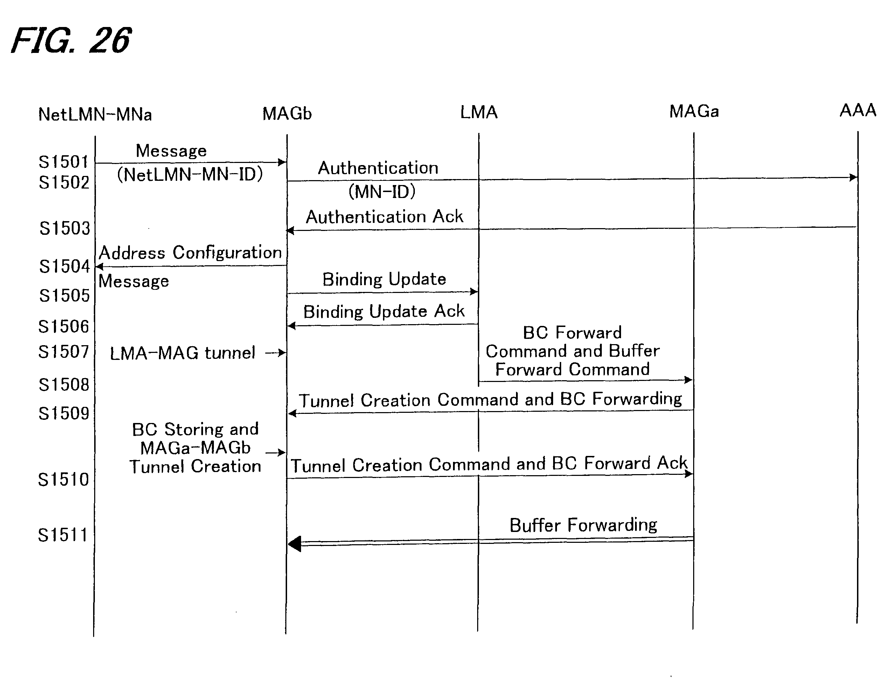

FIG. 26 is a sequence diagram when a Proxy Mobile IP scheme is applied to the handover of the present embodiment.
As shown in FIG. 26, when the NetLMM-MN has moved to the link of another MAG, the MAG which the NetLMM-MN newly accesses makes communication for authentication with the AAA server and transmits Proxy Binding Update to the LMA. The process that fallows is controlled by the LMA in the same manner as in FIG. 23, whereby forwarding of BC, forwarding of buffer and the like are executed from the previously accessed MAG of the NetLMM-MN to the newly accessed MAG to complete handover.

### [The fifth embodiment]

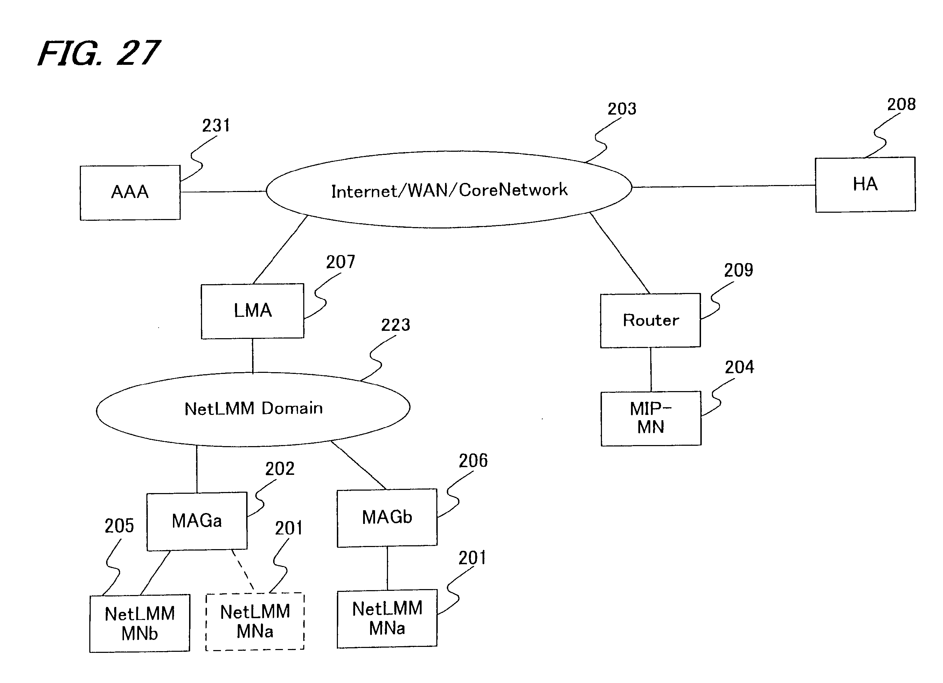

FIG. 27 is a diagram showing a schematic configuration of a network in the present embodiment.

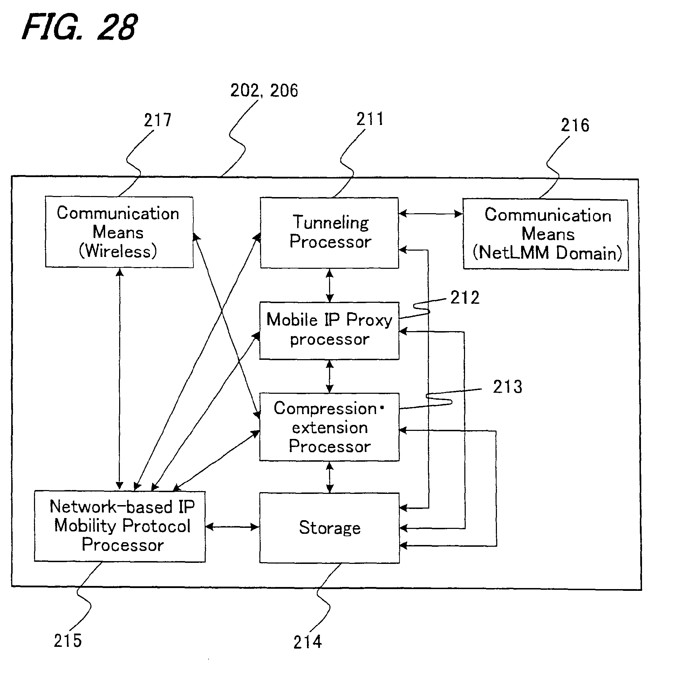

FIG. 28 is a block diagram showing an MAG configuration in the present embodiment.

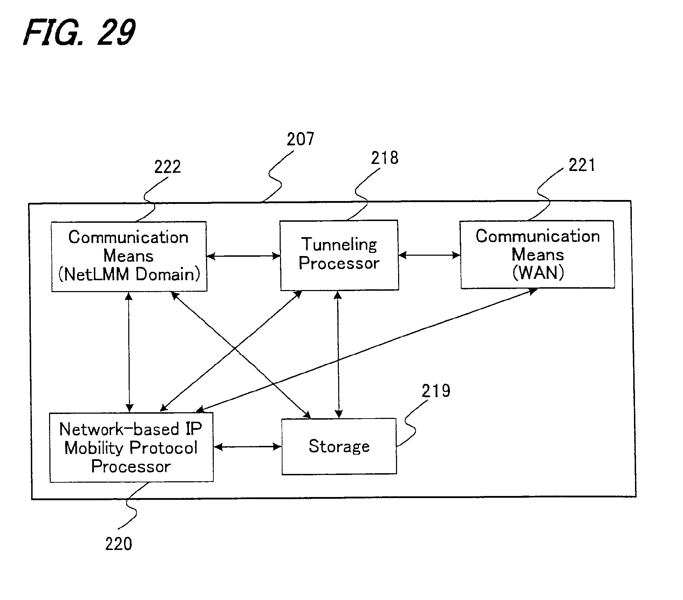

FIG. 29 is a block diagram showing an LMA configuration in the present embodiment.

As shown in FIG. 27, initially a NetLMM-MNa 201 is under the control of an MAGa 202. It is also assumed that NetLMM-MNa 201 is communicating with an MIP-MN 204 via an Internet/WAN/CoreNetwrok 203. There exists another NetLMM-MNb 205 other than NetLMM-MNa 201 under the control of MAGa 202.

Description will be made on an example where NetLMM-MNa 201 transfers from the control of MAGa 202 to and under the control of an MAGb 206 as the NetLMM-MNa moves. Herein, it is assumed that NetLMM-MNa 201 is controlled by an LMA 207 andMIP-MN 204 is controlledbyanHA208. MIP-MN 204 is located on an external link, namely, the link of a Router 209.

Hereinbelow, the MAG in FIG. 28 and the LMA in FIG. 29 will be described.

As shown in FIG. 28, MAGs 202 and 206 are configured by inclusion of a tunneling processor 211 that encapsulates and decapsulates packets; a Mobile IP proxy processor 212 for making control as to Mobile IP; a header compression and extension processor 213 for compressing or extending headers based ROHC; a storage 214 made of a database section and a temporary storage capable of temporarily storing; and a network-based IPmobility protocol processor 215 that performs exchange (protocol-wise process) of network-based IP mobility protocol messages with tunneling processor 211, creating and controlling tunneling processor 211/header compression and extension portion 213, and storing and deleting data of storage 214 and others.

Further, the communication means of the MAG typically corresponds to the device processor in the OS (Operating System) associated with the actual communication interface. The MAG in the present embodiment has two communication means, 216 for NetLMM domain and 217 for wireless devices.

This communication means 217 for wireless devices has a function of identifying an MN from its MAC address etc., and can give notice of MN-ID to tunneling processor 211 or network-based IP mobility protocol processor 215, can give notice of MAC address information to tunneling processor 211 or network-based IP mobility protocol processor 215, or can deliver the information for identifying an MN to tunneling processor 211 or network-based IP mobility protocol processor 215, by creating an emulated device for every MN. Further, when an MN is identified from the MAC address, MN-ID and MAC address have been stored in storage 214 in an associated manner.

In contrast, mobile IP proxy processor 212/tunneling processor 211/header compression and extension processor 213 are emulated device processors, which are handled on the OS equivalently to the aforementioned device processor.

As shown in FIG. 29, LMA 207 is also configured by inclusion of a tunneling processor 218, a storage 219, a network-based IP mobility protocol processor 220.

Also, the communication means of LMA 207 typically corresponds to the device processor in the OS associated with the actual communication interface (e.g., Ethernet card etc.). The LMA in the present embodiment has two communication means, 221 for WAN (Wide Area Network, Internet/CoreNetwork etc., can be considered as WAN) and 222 for NetLMM domain. This NetLMM domain 223 is an RAN (Radio Access Network) etc. for mobile phones, for example.

In contrast, tunneling processor 218 is an emulated device processor, which is handled on the OS equivalently to the aforementioned device processor.

To begin with, description will be made from the start of communication when NetLMM-MNa 201 is located under the control of MAGa 202.

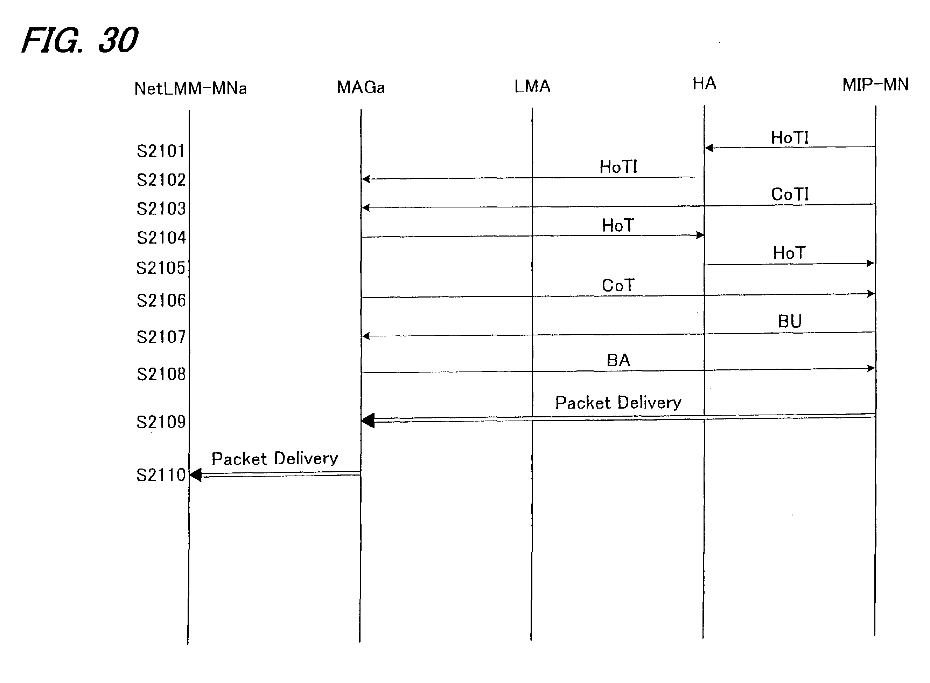

FIG. 30 is a sequence diagram showing the procedural steps when the MAG executes a proxy functional process for a CN in the initial Mobile IP.

When communication begins, communication is started by way of HA 208, either from NetLMM-MNa 201 or from MIP-MN 204.

Thereafter, MIP-MN 204 performs RR for route optimization. The destination of this RR is directed to NetLMM-MNa-IP, and the RR reaches MAGa 202 by way of the LMA 207-MAGa 202 tunnel.

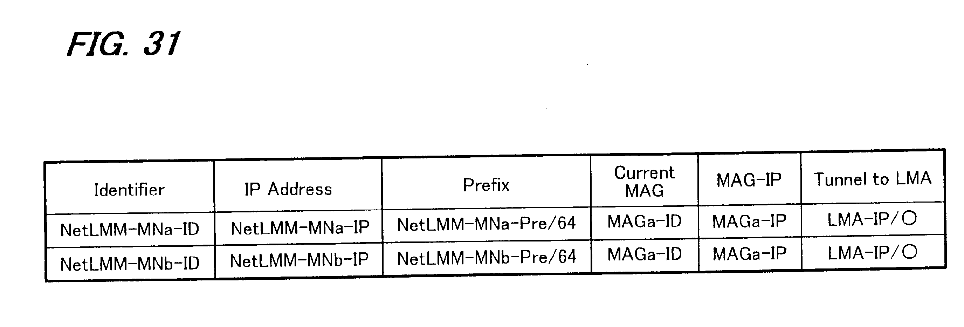

Storage 214 of MAGa 202 holds a database for network-based IP mobility protocols as shown in FIG. 31.
Mobile IP proxy processor 212 makes the following determination by referring to this database.

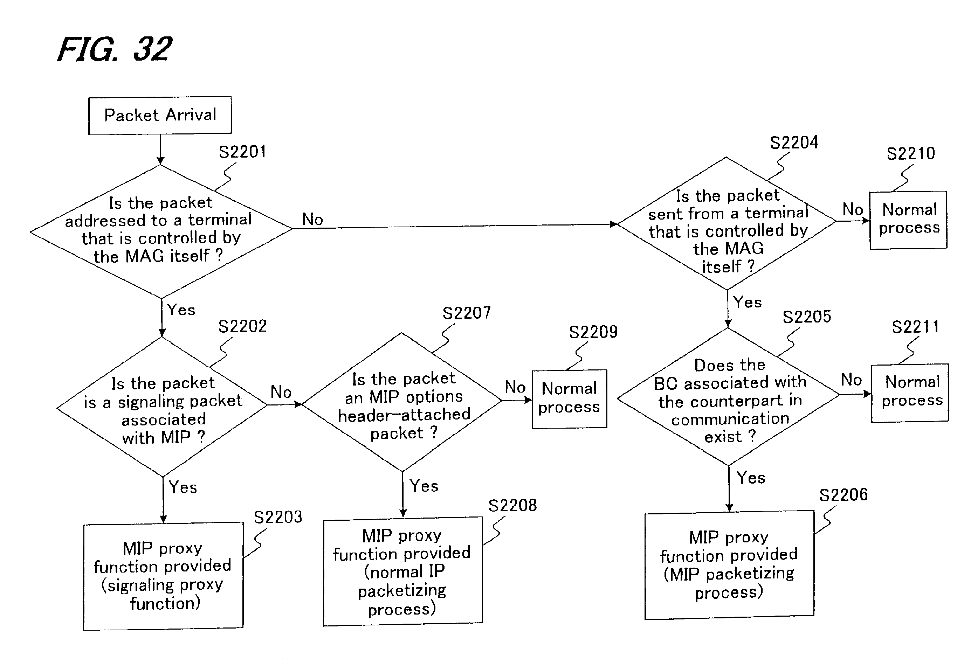

FIG. 32 is a flow for determining a provision of an MIP proxy function in the present embodiment.

Mobile IP proxy processor 212 of MAGa 202 determines whether an MIP proxy process should be provided, following this flow.

The Mobile IP proxy process includes three functions when roughly classified.
The process includes: the function of performing signaling by proxy for a CN of Mobile IP; the function of shaping an options header-attached packet sent from MIP-MN 204 into a normal IP packet and forwarding it; and the function of shaping a normal IP packet sent from a NetLMM-MN and addressed to an MIP-MN into an options header-attached Mobile IP packet and transmitting it.

First, when a packet reaches Mobile IP proxy processor 212 of LMA 26, Mobile IP proxy processor 212 determines whether the packet is addressed to a terminal controlled by the MAG itself, at S2201.

Here, the answer is "Yes", Mobile IP proxy processor 212 determines whether the packet is a signaling packet associated with MIP, at S2202.

Here, the answer is "Yes", Mobile IP proxy processor 212 performs an MIP proxy functional process (signaling proxy functional process) at S2203.

On the other hand, when the answer is "No" at S2202, Mobile IP proxy processor 212 determines whether the packet is one that is sent from a terminal controlled by the MAG itself, at S2204.

Here, the answer is "Yes", Mobile IP proxy processor 212 determines whether storage 214 holds the BC associated with the terminal of the communication partner, at S2205.

Here, the answer is "Yes", Mobile IP proxy processor 212 performs an MIP proxy functional process (MIP packetizing process) at S2206.

On the other hand, when the answer is "No" at S2202, Mobile IP proxy processor 212 determines whether the packet is an MIP options header-attached packet at S2208.

Here, the answer is "Yes", Mobile IP proxy processor 212 performs an MIP proxy functional process (normal IP packetizing process) at S2208.

On the other hand, if the answer is "No" at S2204, S2205 or S2207, Mobile IP proxy processor 212 performs a normal IP routing process at S2209, S2210 or S2211.

Initially, MAGa 202 receives HoTI at S2101 and S2102 and CoTI at S2103 from communication means (NetLMM domain 216) via LMA 207.

First, Mobile IPproxyprocessor 212 of theMAGa refers to the data shown in FIG. 31 stored in the storage and recognizes that the destination address of these packets are NetLMM-MNa-IP or these packets are addressed to a node controlled by the MAG itself.

Since HoTI and CoTI are MIP signaling packets, Mobile IP proxy processor 212 of MAGa 202 offers an MIP proxy function (signaling proxy function) of S2203. As a result, Mobile IP proxy processor 212 of MAGa 202 generates HoTI and CoT packets for the HoTI and CoTI by setting NetLMM-MNa-IP as the source address and transmits the HoT at S2104 and S2105 and the CoT at S2106 from communication means (NetLMM domain) 216 to the address of MIP-MN via LMA 207.

MIP-MN 204 having received the HoT and CoT generates BU at S2107 and addresses and transmits the HoT and CoT to NetLMM-MNa-IP.

Similarly to the RR, the destination of the BU is directed to NetLMM-MNa-IP, and the BU reaches MAGa 202 by way of the LMA 7-MAGa 202 tunnel, and MAGa 202 receives the BU from communication means (NetLMM domain) 216.

Mobile IP proxy processor 212 of the MAGa recognizes from FIG. 31 that the BU is addressed to a node controlled by the MAG itself. Further, since the BU is an MIP signaling packet, the processor offers the MIP proxy function (signaling proxy function) at S2203.

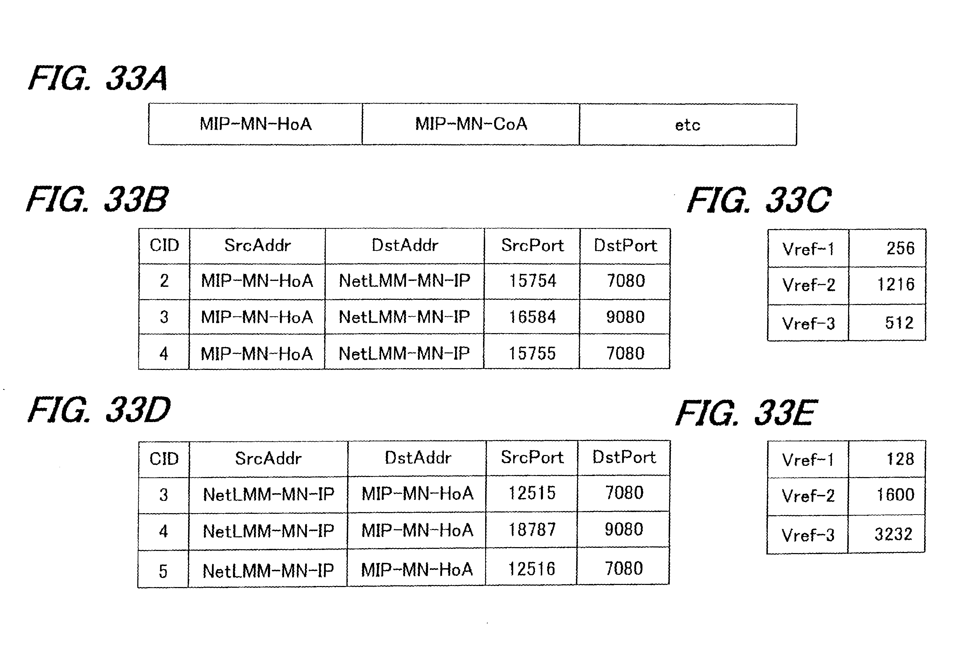

Herein, since the BU is received, BC as shown in FIG. 33A is generated and stored into the storage in association with NetLMM-MNa in the data of FIG. 31.

Further, similarly, storage 214 holds the ROHC contexts for compression as in FIG. 33B and FIG. 33C and the ROHC contexts for extension as in FIG. 33D and FIG. 33E, in association with NetLMM-MNa 1. Strictly, the ROHC contexts are not held when communication starts, but the contexts are generated as the communication continues, and updated. Though ROHC context stores values for various fields other than those illustrated, FIGS. 33B to FIG. 33E give only part for simplicity.

Thereafter, if required, Mobile IP proxy processor 212 of MAGa 2 transmits BA from communication means (NetLMM domain) 216 to MIP-MN 204 via LMA 207 at S2108.

At and after S2109, route optimization is completed so that packets from MIP-MN 204 reach MAGa 202 via LMA 207, instead of passing through HA 208.

Next, the process executed when this route-optimized packet has reached from MIP-MN 204 to NetLMM-MNa 201 will be described.

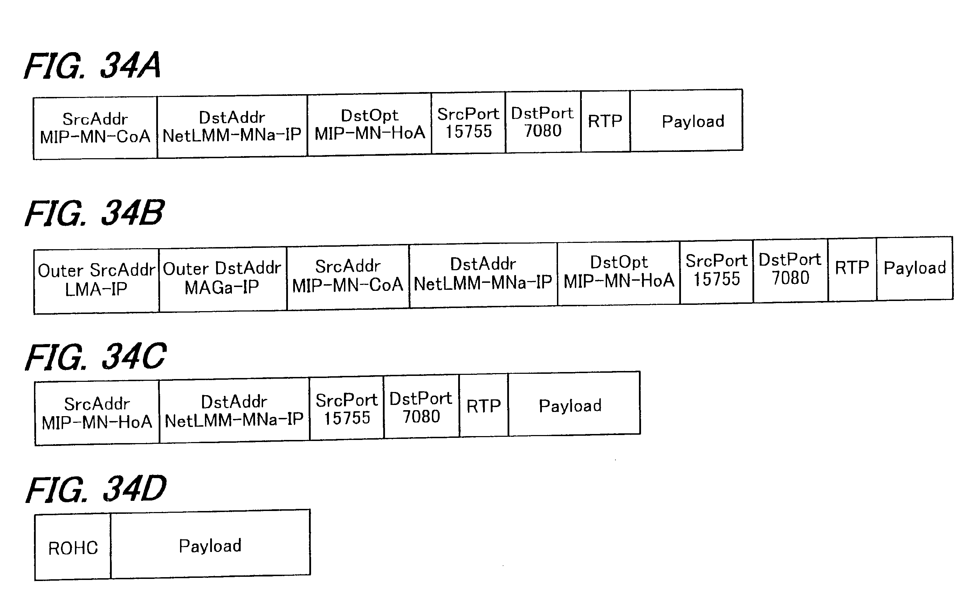

FIGS. 34A-34D show examples of packet formats in the present embodiment.
For example, the packet from MIP-MN 204 has a configuration shown in FIG. 34A before the packet reaches LMA 207. Actually, the IP/UDP/RTP header has other various fields, but those are omitted herein for simplicity.

LMA 207 having received the packet from communication means (for WAN) 221, transfers this packet to tunneling processor 218. Tunneling processor 218 encapsulates the packet as shown in FIG. 34B.

Then, network-based IP mobility protocol processor 220 of LMA 207 forwards the packet as shown in FIG. 34B to MAGa 2 via communication means (NetLMM domain) 222.

MAGa 202 transfers the packet to tunneling processor 211 first by way of communication means (NetLMM domain) 216.

Tunneling processor 211 decapsulates the packet as in FIG. 34B to obtain the restored packet as in FIG. 34A.

Next, tunneling processor 211 transfers the packet as in FIG. 34A to Mobile IP proxy processor 212. Mobile IP proxy processor 212 determines whether an MIP proxy function should be provided, following the flow in FIG. 32.

Mobile IP proxy processor 212 refers to the data of FIG. 31 in storage 14, and recognizes that the destination address is NetLMM-MNa-IP, and determines that it is addressed to a terminal that is controlled by the MAG itself at S2201. Next, at the decision of S2202, this packet is determined not to be MIP signaling. Further, since it is found that the options header is attached at the decision of S2207, Mobile IP proxy processor 212 refers to the BC for NetLMM-MNa 1 in storage 214 in order to determine whether this packet is an MIP packet. As a result, the BC exists, hence the packet is determined to be an MIP packet. Mobile IP proxy processor 212 executes a provision of the MIP proxy function (normal IP packetizing process) at S2208 to shape the packet into a normal IP packet as in FIG. 34C.

Then, Mobile IP proxy processor 212 outputs the packet to header compression and extension processor 213. Header compression and extension processor213compressesthe header. From the packet as in FIG. 34C and the compression context as in FIG. 33B, CID turns out to be 4 while the sequence number (W-LSB) for ROHC is calculated from the sequence number as in FIG. 33C or the like so as to create a ROHC header and thereby form a packet as in FIG. 34D. Network-based IP mobility protocol processor 215 transmits the packet to NetLMM-MNa 201 via communicationmeans (wireless) 217 directed to NetLMM-MNa 201.

Next, the process for the packet from NetLMM-MNa 201 to MIP-MN 204 will be described.

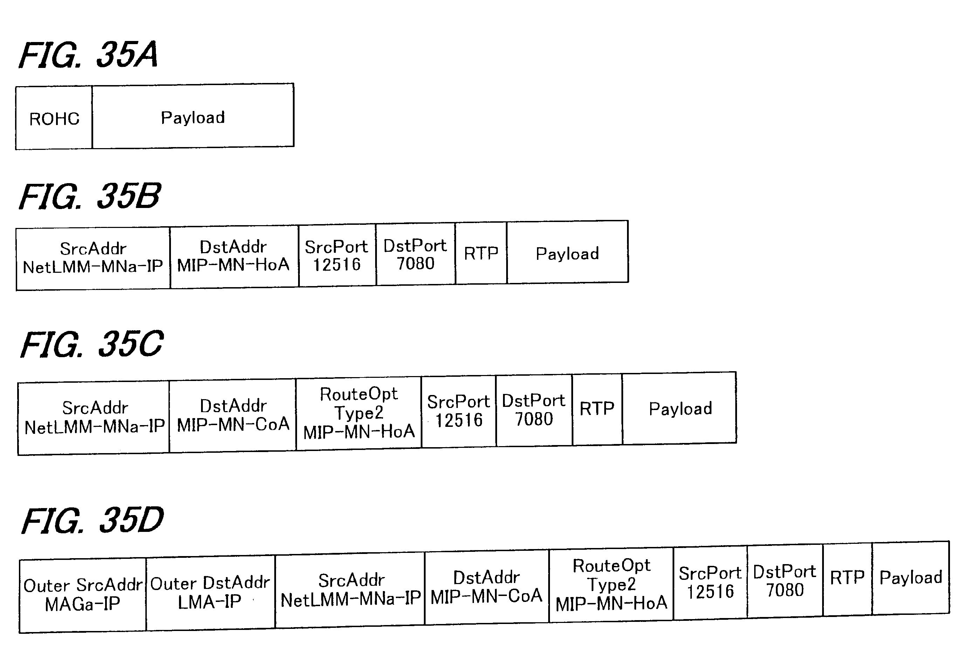

The packet from NetLMM-MNa 201 arrives at MAGa 202 in the form shown in FIG. 35A. The packet is transferred to header compression and extension processor 213 via communication means (wireless) 217. Herein, in communication means (wireless) 217, it is determined from the bearer information such as the MAC address etc., that the packet has come from NetLMM-MNa 201, and a header extension process is executed by referring to the ROHC extension context {FIG. 33D, FIG. 33E} for NetLMM-MNa 201. As a result of this, suppose that the header is extended as in FIG. 35B. For example, the context is determined to be that on the third line in FIG. 33D and the sequence number is calculated from FIG. 33E. Next, header compression and extension processor 213 outputs this packet to Mobile IP proxy processor 212.

Following the flow of FIG. 32, Mobile IP proxy processor 212 determines whether an MIP proxy function should be offered by referring to FIG. 31 in storage 214. Mobile IP proxy processor 212 recognizes that this packet is not addressed to a terminal that is controlled by the MAG itself at the decision of S2201, that the packet is from a terminal that is controlled by the MAG itself at the decision of S2204 and that there exists the BC associated with the correspondent node as shown in FIG. 33A by referring to storage 214 at the decision of S2205, so that the processor determines that the MIP proxy function (MIP packetizing process) of S2206 should be offered. As a result, the packet in FIG. 35B is changed by assigning MIP-MN-CoA as the destination address and inserting a routing options header type202, into the MIP packet as in FIG. 35C, which is transferred to tunneling processor 211.

Tunneling processor 211 determines LMA 7 based on the source address by referring to Fig. 31 in storage 214, and encapsulates the packet.

As a result of this, the packet is encapsulated as in FIG. 35D, and network-based IP mobility protocol processor 215 forwards the packet to LMA 207 via communication means (NetLMM domain) 216.

LMA 207 receives the packet via communication means (NetLMM domain) 222 and transfers the packet to tunneling processor 218.

Tunneling processor 218 removes the outer header so that the packet in the form shown in FIG. 35C is transferred to MIP-MN 204 via communication means (WAN) 211.

Next, the process when handover was done will be described.

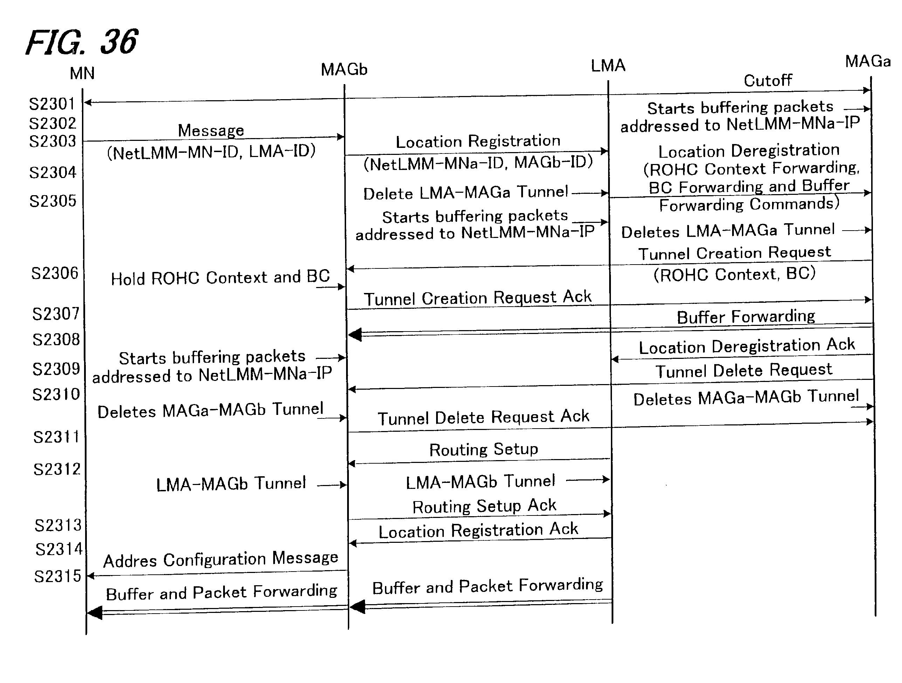

FIGS. 36, 37 and 38 are sequence diagrams when handover is executed in the present embodiment. First, the procedures of handover in FIG. 36 will be described.

NetLMM-MNa 201 is handed over from the control of MAGa 202 to MAGb 206.

At S2301, NetLMM-MNa 201 cuts off the connection with MAGa 202 and starts connection with MAGb 206.

Since MAGa 202 is cut off from NetLMM-MNa 201, MAGa 202 starts buffering the packets addressed to NetLMM-MNa 201 at S2302.

At S2303, NetLMM-MNa 201 transmits a message including NetLMM-MNa-ID, the identifier of the NetLMM-MNa itself, and LMA-ID, the identifier of LMA 207 that controls the NetLMM-MNa itself, to MAGb 206 in order to connect with the MAG. As this message, RS, NS, NA, DHCP request or the like maybe considered.

MAGb 206, as receiving this message via communication means (wireless) 217, outputs the message to network-based IP mobility protocol processor 215. Network-based IP mobility protocol processor 215 generates a location registration message including NetLMM-MNa-ID and MAGb-ID, the identifier of the MAG itself and transmits the message to LMA 207 via communication means (NetLMM domain) 216, at S2304.

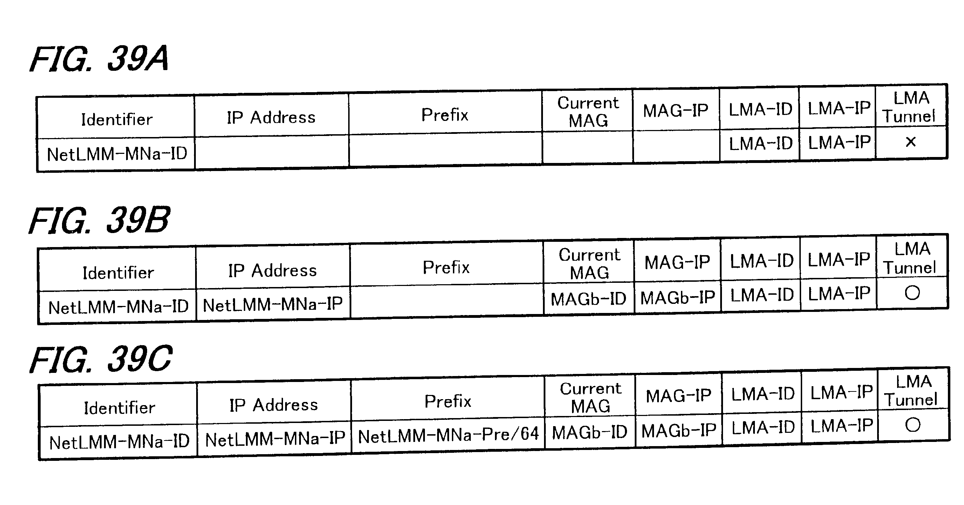

Further, at this time, network-based IP mobility protocol processor 215 of MAGb 206 creates data on NetLMM-MNa 201 as in FIG. 39A in storage 214. At this point of time, NetLMM-MNa-ID and limited information on LMA 207 etc. alone are stored therein.

LMA 207 having received the location registration from communication means (NetLMMdomain) 222, transfers the message to network-based IP mobility protocol processor 220. Network-based IP mobility protocol processor 220 searches the database in storage 219 based on NetLMM-MN-ID as a key and detects that NetLMM-MNa 201 is currently located under the control of MAGa 202. As a result of this, network-based IP mobility protocol processor 220 determines that an event of handover occurred, and transmits location registration to MAGa 202, which is the previously accessed MAG, via communication means (NetLMM domain) 222, at S2305. At this time, network-based IP mobility protocol processor 220 also gives instructions to send buffer, BC, and ROHC context to MAGb 206. For this purpose, this location registration includes NetLMM-MNa-ID and MAGb-ID. Further, at this time, communication (NetLMM domain) 222 deletes the LMA-MAGa tunnel in tunneling processor 218. After this, LMA 207 buffers the packets addressed to NetLMM-MNa-IP.

MAGa 202 having received the location registration via communication means (NetLMM domain) 216 , transfers the message to network-based IP mobility protocol processor 215. Network-based IP mobility protocol processor 215 deletes the LMA 207-MAGa 202 tunnel of tunneling processor 211, and transmits a tunnel creation request to MAGb 206 via communication means (NetLMM domain) 216, at S2306. This tunnel creation request is transmitted also with the ROHC context information as in FIGS. 33B to 33E and the BC as in FIG. 33A.

MAGb 206 having received the tunnel creation request from communication means (NetLMM domain) 216 transfers the message to network-based IP mobility protocol processor 215. Network-based IP mobility protocol processor 215 stores the received BC and ROHC context into storage 214 and creates a tunnel between MAGa 202 and MAGb 206 in tunneling processor 211. This MAGa 202-MAGb 206 tunnel in MAGb 206 is a one-way tunnel from MAGa 202 to MAGb 206, which performs a decapsulating process. When these have been completed, network-based IP mobility protocol processor 215 of MAGb 206 transmits tunnel creation request Ack to MAGa 202 via communication means (NetLMM domain) 216 at S2307.

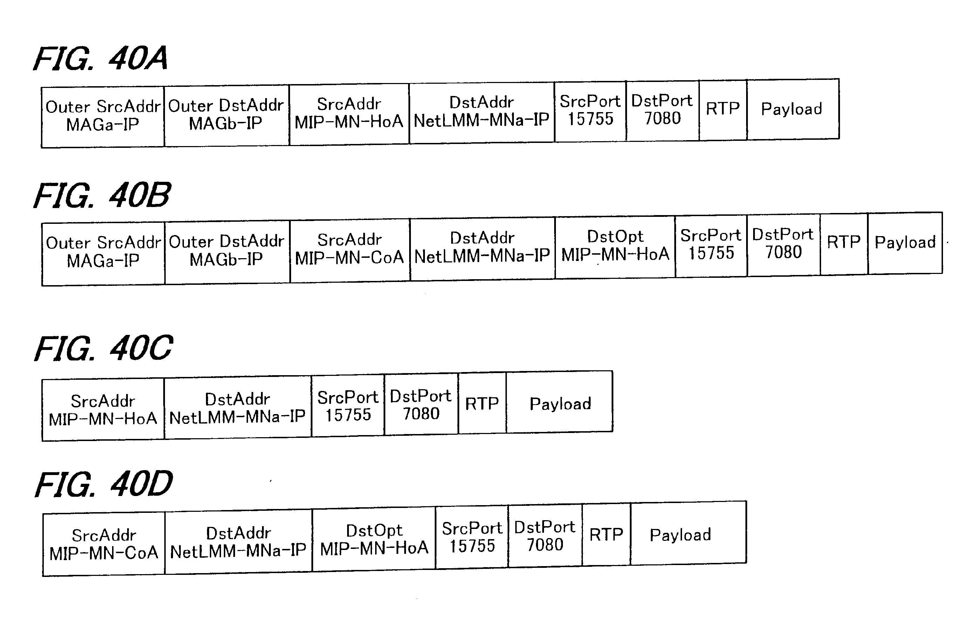

MAGa 202 having received the tunnel creation request Ack via communication means (NetLMM domain) 216, transfers the message to network-based IP mobility protocol processor 215. Network-based IP mobility protocol processor 215 forms the buffer into forwarding packets and transmits the packets to MAGb 206 via communication means (NetLMM domain) 216 at S2308. This forwarding packet is formed by encapsulation, assigning MAGa-IP as the outer source address and MAGb-IP as the outer destination address, as shown in FIG. 40A or 40B.

As the buffer has been completely forwarded, network-based IP mobility protocol processor 215 of MAGa 202 transmits location registration Ack to LMA 207 via communication means (NetLMM domain) 216 at S2309. Further, network-based IP mobility protocol processor 215 transmits a tunnel delete request to MAGb 206 at S2310.

MAGb 206 receives the forwarded packets from MAGa 2. The packets are forwarded in the form shown in FIG. 40A or 40B. As receiving these packets through communication means (NetLMM domain) 216, MAGb 206, transfers the packets to tunneling processor 211 because these packets are tunnel packets.

In tunneling processor 211, the outer header is deleted in such a manner that the packet, if it has the form of FIG. 40A, is transformed into the form of FIG. 40C and the packet, if it has the form of FIG. 40B, is transformed into the form of FIG. 40D. Tunneling processor 211, after deleting the outer header, buffers the packet (I).
Thereafter, MAGb 206 having received the tunnel delete request from MAGa 202 via communication means (NetLMM domain) 216, deletes the MAGa 202-MAGb 206 tunnel from tunneling processor 211, and transmits tunnel delete request Ack to MAGa 202 at S2311. This tunnel delete request Ack does not need to be transmitted depending on cases.

LMA 207 having received location registration Ack via communication means (Net LMM domain) 222, transfers the message to network-based IP mobility protocol processor 220. Network-based IP mobility protocol processor 220 generates routing setup. This routing setup includes NetLMM-MNa-ID, MAGb-ID, LMA-ID, NetLMM-MNa-IP and the like. At S2312, this routing setup is transmitted to MAGb 206 via communication means (NetLMM domain) 222.

Also, at this time, in LMA 207, a tunnel between LMA 207 and MAGb 206 is created in tunneling processor 218. This tunnel executes an encapsulating process for the packet to be sent to NetLMM-MNa 201 via MAGb 206 and a decapsulating process for the packet to reach MAGb 206 from NetLMM-MNa 201 via MAGb 206.

MAGb 206 having received the routing setup via communication means (NetLMM domain) 216 transfers the message to network-based IP mobility protocol processor 215. Network-based IP mobility protocol processor 215 creates a tunnel between LMA 207 and MAGb 206 in tunneling processor 211. This tunnel executes a decapsulating process for the packet to be sent to NetLMM-MNa 201 via MAGb 206 and an encapsulating process for the packet to reach MAGb 206 from NetLMM-MNa 201.

Then, at S2313, routing setup Ack is transmitted to LMA 207 via communication means (NetLMM domain 216. At this point, network-based IP mobility protocol processor 215 of MAGb 206 overwrites FIG. 39A into that shown in FIG. 39B.

LMA 207 having received the routing setup Ack via communication means (NetLMM domain) 222 transfers the message to network-based IP mobility protocol processor 220. Network-based IP mobility protocol processor 220 generates location registration Ack and transmits the Ack to MAGb 206 via communication means (NetLMM domain) 222, at S2314. This location registration Ack includes the prefix information of NetLMM-MNa 201.

Thereafter, network-based IP mobility protocol processor 220 of LMA 7 starts forwarding the packets which are stored in the buffer and/or routed to LMA 207, to MAGb 206.

MAGb 206 having received the location registration Ack via communication means (NetLMM domain) 216, transfers the message to network-based IP mobility protocol processor 215. At S2315, network-based IP mobility protocol processor 215 generates an address configuration message and transmits the message to the address of NetLMM-MNa 201 via communication means (wireless) 217. As this address configuration, RA, DHCP-Advertise, NS, NA or the like may be considered. In the present embodiment, it is assumed that DHCP-Advertise is used as the stateful address configuration and that no signaling will exist after this. When RA is a stateless configuration, DAD is necessary.

After this, MAGb 206 can forward packets to NetLMM-MNa 201, and sequentially forwards the packets that were forwarded from MAGa 202 in the order of the sequence number included in UDP header or RTP header, to LMA 207.

Next, forwarding to NetLMM-MNa 201 will be described.

In MAGb 206, the packets from MAGa 202 and the packets from LMA 207 have been buffered. After arrival of these packets, the packets have been simply subjected to tunnel processing for packet decapsulation by tunneling processor 211, and buffered. As a result, the packets have been buffered in the format shown in FIG. 40C or FIG. 40D.

These buffered packets are transferred to Mobile IP proxy processor 212, where it is determined whether these packets need a Mobile IP proxy process, following the flow shown in FIG. 32. As to the packet in the form of FIG. 40C, Mobile IP proxy processor 212, by referring to the data as in FIG. 39C in storage 214, determines that the packet is addressed to the packet that is controlled by the MAG itself at S2201, but determines that the packet is not a signaling packet, at S2202 and that the packet has no options header, at S2207, and hence determines to subject the packet to the normal IP forwarding process at S2209, and forwards it to header compression and extension processor 213.

On the other hand, when the packet is given in the form of FIG. 40D, Mobile IP proxy processor 212, by referring to the data as in FIG. 39C in storage 214, determines that the packet is addressed to the packet that is controlled by the MAG itself, at S2201, and determines that the packet is not an MIP signaling packet, at S2202. Then, since the packet has a destination options header attached thereto, the processor refers to the BC for NetLMM-MNa 101 in storage 214, in order to determine whether the packet is an MIP packet, at S2207. As a result, there exists BC that was forwarded from MAGa 202, so that the packet is determined to an MIP packet and the MIP proxy function (normal IP packetizing process) of S2208 is offered.

Mobile IP proxy processor 212 executes a normal IP packetizing process so as to transform the packet as in FIG. 40D to the normal IP packet as in FIG. 40D, which is transferred to header compression and extension processor 213.
The process for the packet from LMA 207 is the same as that in MAGa 202 described above, so description is omitted.

Next, in header compression and extension processor 213, the packets transferred from Mobile IP proxy processor 212 are rearranged in regular order by checking the sequence number of the UDP header or RTP header, then a compression and extension process of the headers is executed. In the compression and extension process of the headers, because the ROHC context forwarded from MAGa 202 exists, the headers are compressed following this ROHC context, and the packets are transmitted to NetLMM-MNa 201 via communication means (wireless) 217.

In the present invention, buffering or the like is effected. For example, buffering is executed after completion of the tunneling process in (I), but buffering may be done without executing a tunneling processing, or buffering may be done after execution of a Mobile IP proxy process. After all, the processing should be done so that the packets will not be nested (the order will not be mixed up) when the packets are forwarded to NetLMM-MNa 1.

It is necessary to take care that there is a risk of the order being mixed up if the header compressing process is effected before buffering. This is caused by a reduction of the size of the sequence number after header compression to as low as 4 bits. To deal with this, when packets are buffered after header compression, it is possible to buffer the compressed packets together with their sequence number or take any other measures. After all, buffering may and should be done so that the packets will not be nested when the packets are forwarded to NetLMM-MNa 201.

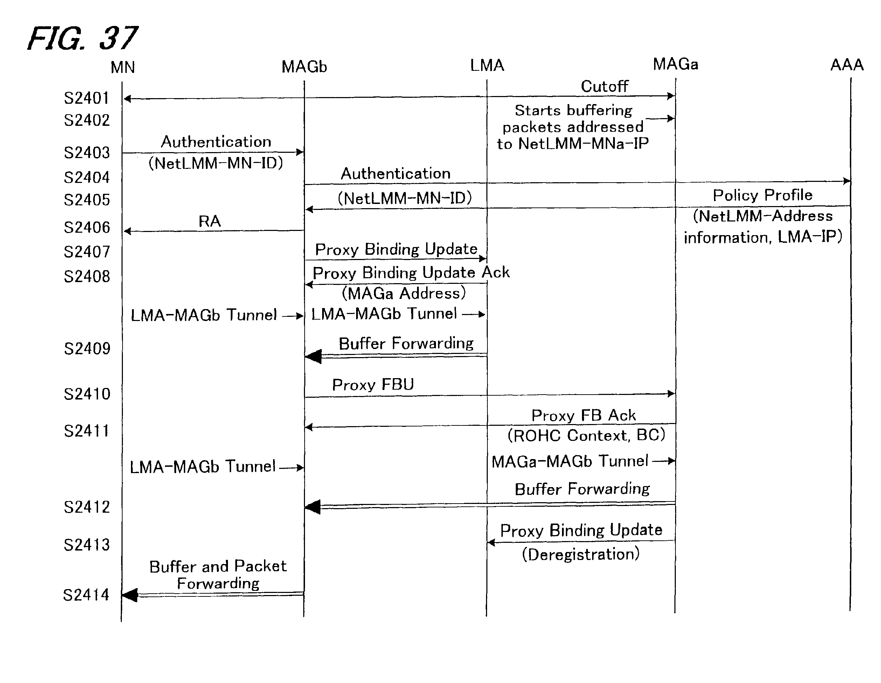

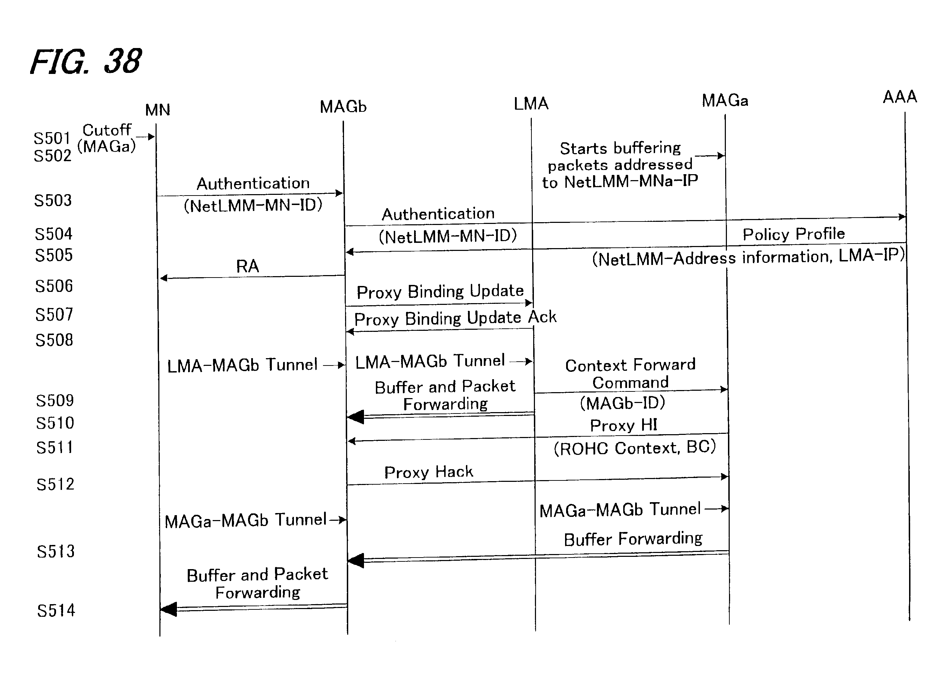

Hereinbelow, a derivative form of the handover sequence in the present embodiment will be described based on FIGS. 37 and 38.
In FIGS. 37 and 38, handover based on a Proxy Mobile IP scheme is executed. It is assumed that AAA server 231 is connected via Internet/WAN/CoreNetwork 203, as shown in FIG. 27.
To begin with, the sequence in FIG. 37 will be described.

At S2401, NetLMM-MNa 201 cuts off the connection with MAGa 202.

Since MAGa 202 is cut off from NetLMM-MNa 201, MAGa 202 starts buffering the packets addressed to NetLMM-MNa 201, at S2402.

At S2403, NetLMM-MNa 201 gives an authentication notice as a connection request, to MAGb 206. This notice includes the identifier of NetLMM-MNa 201 or NetLMM-MNa-ID.

MAGb 206 having received the authentication notice from NetLMM-MNa 201, transmits a notice including NetLMM-MNa-ID as authentication to AAA server 231, at S2404.

At S2405, MAGb 6 receives a policy profile notice from AAA server 231. This policy profile includes the address information (network prefix, configuration scheme, etc.) of NetLMM-MNa 201.

MAGb 206 creates RA for NetLMM-MNa from the policy profile and transmits the RA to NetLMM-MNa at S2406.

MAGb 206, after transmitting the RA to NetLMM-MNa, transmits Proxy Binding Update to LMA 207, at S2407. This Proxy Binding Update includes the IP address or prefix of NetLMM-MNa and also the IP address of MAGb 206.

The LMA returns Proxy Binding Update Ack as Ack for confirmation, to MAGb 206, at S2408. At this time, the IP address of MAGa 202, the MAG to which NetLMM-MNa previously belonged, is also transmitted. It should be noted that when this Proxy Binding Update Ack is returned, an LMA 207-MAGb 206 tunnel is established in tunneling processor 218 of LMA 207.

As a result, LMA 207 starts forwarding of packets addressed of NetLMM-MNa 201, to MAGb 206 at S2409.

MAGb 206 having received the Proxy Binding Update Ack creates proxy FBU from the address of MAGa 202 included in the Proxy Binding Update Ack and transmits the Proxy FBU to MAGa 202 at S2410. This Proxy FBU includes the IP address or address information of NetLMM-MNa 201 and also the IP address of MAGb 206.

MAGa 202 having received the Proxy FBU creates Proxy FBAck as Ack for confirmation and transmits the Ack at S2411. This Proxy FBAck is included with BC information and ROHC context. At the time of transmission and reception of this Proxy FBAck, an MAGa 202-MAGb 206 tunnel is created in tunneling processor 211 of MAGa 202.

As a result of formation of the MAGa 202-MAGb 206 tunnel, the buffer held at MAGa 202 is forwarded to MAGb 206 at S2412. As to the forwarding method, the method described before (using option headers etc.) may be used.

MAGa 202 having received the Proxy FBAck does not need the tunnel for NetLMM-MNa 201 with LMA 207, and transmits Proxy Binding Update (Deregistration) to delete the tunnel at S2413. Here, this step may be omitted if timer control is used.

As a result of these, it is possible for MAGb 206 to forward packets to NetLMM-MNa 201 without any packet loss, at S2414.

Next, the derivative form of the handover sequence in the present embodiment in FIG. 38 will be described.

At S2501, NetLMM-MNa 201 cuts off the connection with MAGa 202. It is assumed in this example that NetLMM-MNa 201 spontaneously cuts off the connection with MAGa 202.

Since MAGa 202 cannot deliver packets to NetLMM-MNa 201, MAGa 202 starts buffering at S2502.

At S2503, NetLMM-MNa 201 gives an authentication notice, as a connection request, to MAGb 206. This notice includes the identifier of NetLMM-MNa 201 or NetLMM-MNa-ID.

MAGb 206 having received the authentication notice from NetLMM-MNa 201, transmits a notice including NetLMM-MNa-ID as authentication to AAA server 231, at S2504.

At S2505, MAGb 6 receives a policy profile notice from AAA server 231. This policy profile includes the address information (network prefix, configuration scheme, etc.) of NetLMM-MNa 201.

MAGb 206 creates RA for NetLMM-MNa 201 from the policy profile and transmits the RA to NetLMM-MNa 201 at S2506.

MAGb 206, after transmitting the RA to NetLMM-MNa 201, transmits Proxy Binding Update to LMA 207, at S2507. This Proxy Binding Update includes the IP address or prefix of NetLMM-MNa 201 and also the IP address of MAGb 206.

The LMA 207 returns Proxy Binding Update Ack as Ack for confirmation, to MAGb 206, at S2508. At this time, the IP address of MAGa 202, the MAG to which NetLMM-MNa previously belonged, is also transmitted.
It should be noted that when this Proxy Binding Update Ack is returned, an LMA 207-MAGb 206 tunnel is completed in tunneling processor 218 of LMA 207. As a result, it is possible to forward packets from LMA 207 to MAGb 206, at S2510.

LMA 207 having the returned Proxy Binding Update Ack, instructs MAGa 202 to forward the context. This message includes the address of MAGb 206.

MAGa 202 having received the context forward command, transmits a message, Proxy HI (Handover Initiate) for creating a tunnel to MAGb 206, at S2511. This Proxy HI is made to include ROHC context and BC.

MAGb 206 transmits Proxy HAck as Ack for confirmation to ProxyHI, toMAGa 202, at S2512. As a result, anMAGa 202-MAGb 206 tunnel is created.

Since the tunnel has been established, MAGa 202 forwards the buffer to MAGb 206 at S2513. The forwarding method uses the one described above.

MAGb 206 rearranges the packets forwarded from MAGa 202 or LMA 207 in regular order and forwards the packets to NetLMM-MNa 201, at S2514.

Heretofore, the derivative forms of the handover sequence have been described with reference to FIGS. 37 and 38.
The common feature between these is that teaching the address of MAGb 206 to MAGa 202 or teaching the address of MAGa 202 to MAGb 206 enables a tunnel between MAGa 202 and MAGb 206 to be formed, which makes it possible to forward buffer, forward ROHC text and forward BC.

The communication system, control apparatus and router using a network-based IP mobility protocol of the present invention as well as its communication method should not be limited to the above-illustrated examples alone, but various modifications can be added without departing from the gist of the present invention.

## Claims

1. A communication system using a network-based IP mobility protocol, in which a mobile terminal, based on the network-based IP mobility protocol, performs communication by transmission and reception of data through a router that belongs to a same link, based on an address uniquely assigned to the mobile terminal, and when the mobile terminal has moved to another network, communication is changed over by the control of a control apparatus,
**characterized in that** the router on the network which the mobile terminal has newly accessed, receives a notice including the identifier of the mobile terminal from the mobile terminal and transmits a notice including the identifier of the mobile terminal and the identifier or IP address of the router to the control apparatus; and,
the control apparatus transmits a header compression information forward command notice to the previously accessed router of the mobile terminal so as to cause the previously accessed router to transmit header compression information data to the newly accessed router.

2. The communication system using a network-based IP mobility protocol according to Claim 1, wherein when transmitting the header compression information forward command notice to the previously accessed router of the mobile terminal, the control apparatus also transmits a buffer forward command notice so as to cause the previously accessed router to forward data addressed to the mobile terminal to the newly accessed router.

3. The communication system using a network-based IP mobility protocol according to Claim 2, wherein the control apparatus transmits the header compression information forward command notice and the buffer transfer command notice in a combined form.

4. A control apparatus, which is used for a system in which a mobile terminal, based on the network-based IP mobility protocol, performs communication by transmission and reception of data through a router that belongs to a same link, based on an address uniquely assigned to the mobile terminal, and which performs control of changing over communication when the mobile terminal has moved to another network, comprising:
a communication means for receiving a notice, from the router on the network which the mobile terminal has moved, including the identifier of the mobile terminal and the identifier or IP address of the router;
a storing means for holding communication information as to the relaying router and the mobile terminal; and
a control means which updates the information on the newly accessed router and the information as to data forwarding between the routers by referring to the storing means about the communication information on the mobile terminal, based on the identifier of the mobile terminal included in the notice from the router, and which creates a header compression information forward command notice, including the identifier of the mobile terminal and the identifier or IP address of the newly accessed router, so as to instruct the previously accessed router to forward header compression information to the newly accessed router,
wherein the communication means transmits the header compression information forward command notice to the previously accessed router.

5. The control apparatus according to Claim 4, wherein the control means creates a buffer forward command notice, including the identifier of the mobile terminal and the identifier or IP address of the newly accessed router, so as to instruct the previously accessed router to forward data addressed to the mobile terminal to the newly accessed router, and the communication means, when transmitting the header compression information forward command notice to the previously access router, also transmits the buffer forward command notice.

6. The control apparatus according to Claim 5, wherein the control apparatus transmits the header compression information forward command notice and the buffer transfer command notice to the previously accessed router in a combined form.

7. A router for performing transmission and reception of data with a mobile terminal that belongs to a same link and performs communication using a network-based IP mobility protocol, based on an address uniquely assigned to the mobile terminal under the control of a control apparatus, comprising:
a storing means for storing header compression information used when data is transmitted to the mobile terminal;
a communication means for receiving from the control apparatus a header compression information forward command notice that includes the identifier of the mobile terminal and the identifier or IP address of the newly accessed router and instructs to forward the header compression information to the router to which the mobile terminal has newly accessed and; and
a control means for forwarding the header compression information to the newly accessed router in accordance with the forward command notice.

8. The router according to Claim 7, wherein the communication means receives from the control apparatus a buffer forward command notice that includes the identifier of the mobile terminal and the identifier or IP address of the newly accessed router and instructs to forward data addressed to the mobile terminal to the newly accessed router of the mobile terminal, and the control means, when transmitting the header compression information, also forwards the data addressed to the mobile terminal.

9. A communication method, in which a network-based IP mobility protocol is used, for causing a mobile terminal to perform transmission and reception of data through a router that belongs to a same link, based on an address uniquely assigned to the mobile terminal, and causing a control apparatus to perform control of changing over communication of the mobile terminal when the mobile terminal has moved to another network, the method comprising the steps of:
receiving a notice from the mobile terminal and detecting the movement of the mobile terminal to the same link, and giving notice of movement of the mobile terminal to the control apparatus, executed by the router on the network which the mobile terminal has newly accessed, and
transmitting a header compression information forward command notice that instructs to forward header compression information to the newly accessed router, to the previously accessed router, executed by the control apparatus.

10. The communication method according to Claim 9, wherein the control apparatus is caused to execute the step of transmitting a buffer forward command notice that instructs to forward data addressed to the mobile terminal to the newly accessed router, to the previously accessed router.

11. A communication system using a network-based IP mobility protocol, in which a mobile terminal, based on the network-based IP mobility protocol, performs communication by transmission and reception of data through a router that belongs to a same link, based on an address uniquely assigned to the mobile terminal, and when the mobile terminal has moved to another network, communication is changed over by the control of a control apparatus,
**characterized in that** the router stores a binding cache as the communication information on the mobile terminal for relaying in Mobile IP protocol; and,
the router, when the received data is that of communication between the mobile terminal that is controlled by the router itself and a terminal using Mobile IP protocol, relays between the mobile terminal and the terminal that uses Mobile IP protocol.

12. The communication system using the network-based IP mobility protocol according to Claim 11, wherein when the mobile terminal has moved to a network of the other router, the control apparatus transmits a forward command notice to the previously accessed router of the mobile terminal so as to forward the binding cache of the mobile terminal to the newly accessed router of the mobile terminal.

13. The communication system using the network-based IP mobility protocol according to Claim 12, wherein when the mobile terminal makes communication with another terminal through a plurality of interfaces, the previously accessed router also transmits to the newly accessed router, a policy for forwarding (routing policy) for each of the interfaces together with the binding cache.

14. A control apparatus, which is used for a system in which a mobile terminal, based on the network-based IP mobility protocol, performs communication by transmission and reception of data through a router that belongs to a same link, based on an address uniquely assigned to the mobile terminal, and which performs control of changing over communication when the mobile terminal has moved to another network, comprising:
a communication means for receiving a notice, from the router on the network which the mobile terminal has moved, including the identifier of the mobile terminal and the identifier or IP address of the router;
a storing means for holding communication information as to the relaying router and the mobile terminal; and
a control means which updates the information on the newly accessed router and the information as to data forwarding between the routers by referring to the storing means about the communication information on the mobile terminal, based on the identifier of the mobile terminal included in the notice from the router, and which creates a buffer forward command notice including the identifier of the mobile terminal and the identifier or an IP address of the newly accessed router so as to instruct the previously accessed router to forward data to the newly accessed router, and a binding cache forward command notice as the communication information as to the mobile terminal for relaying in Mobile IP protocol,
wherein the communication means transmits the buffer forward command notice and the binding cache forward command notice to the previously accessed router.

15. A router for performing transmission and reception of data with a mobile terminal that belongs to a same link and performs communication using a network-based IP mobility protocol based on an address uniquely assigned to the mobile terminal under the control of a control apparatus, comprising:
a storing means for storing a binding cache as the communication information on the mobile terminal for relaying in Mobile IP protocol; and,
a control means which, when the received data is that of communication between the mobile terminal that is controlled by the router itself and a terminal using a Mobile IP protocol, relays between the mobile terminal and the terminal that uses the Mobile IP protocol.

16. The router according to Claim 15, wherein the control means which, when receiving a binding cache forward command notice from the control apparatus, forwards the binding cache to the newly accessed router of the mobile terminal.

17. The router according to Claim 16, wherein when the mobile terminal makes communication with another terminal through a plurality of interfaces, the control means also forwards to the newly accessed router, a policy for forwarding (routing policy) for each of the interfaces together with the binding cache.

18. A communication method, in which a network-based IP mobility protocol is used, for causing a mobile terminal to perform transmission and reception of data through a router that belongs to a same link, based on an address uniquely assigned to the mobile terminal, and causing a control apparatus to perform control of changing over communication of the mobile terminal when the mobile terminal has moved to another network,
**characterized in that** the router, when the received data is that of communication between the mobile terminal that is controlled by the router itself and a terminal using Mobile IP protocol, relays between the mobile terminal and the terminal that uses Mobile IP protocol.

19. The communication method according to Claim 18, wherein when the mobile terminal has moved to a network of the other router, the control apparatus transmits a forward command notice to the previously accessed router of the mobile terminal so as to forward a binding cache which is the communication information as to the mobile terminal to relay in the Mobile IP protocol.

20. A communication system using a network-based IP mobility protocol, in which a mobile terminal, based on the network-based IP mobility protocol, performs communication by transmission and reception of data through a router that belongs to a same link, based on an address uniquely assigned to the mobile terminal, and when the mobile terminal has moved to another network, communication is changed over by the control of a control apparatus,
**characterized in that** the router on the network which the mobile terminal has newly accessed, receives a notice including the identifier or IP address of the mobile terminal from the mobile terminal and transmits a notice including the identifier or IP address of the mobile terminal and the identifier or IP address of the router to the control apparatus; and,
the control apparatus transmits to the previously accessed router of the mobile terminal, a binding cache forward command notice to instruct forwarding of a binding cache as the communication information as to the mobile terminal for relaying in a Mobile IP protocol, a header compression information forward command notice to instruct forwarding of header compression information and a buffer forward command notice to instruct forwarding of data addressed to the mobile terminal, in a combined manner.

21. The communication system using a network-based IP mobility protocol according to Claim 20, wherein the control apparatus transmits to the previously accessed router, a forwarding setup cancellation command notice to instruct cancellation of the forwarding setup between the control apparatus and the previously accessed router, combining the forwarding setup cancellation command notice with the binding cache forward command notice, the header compression information forward command notice and the buffer forward command notice.

22. A communication system using a network-based IP mobility protocol, in which a mobile terminal, based on the network-based IP mobility protocol, performs communication by transmission and reception of data through a router that belongs to a same link, based on an address uniquely assigned to the mobile terminal, and when the mobile terminal has moved to another network, communication is changed over by the control of a control apparatus,
**characterized in that** the router on the network which the mobile terminal has newly accessed, receives a notice including the identifier or IP address of the mobile terminal from the mobile terminal and transmits a notice including the identifier or IP address of the mobile terminal and the identifier or IP address of the router to the control apparatus;
the control apparatus transmits a notice including the identifier or IP address of the previously accessed router, to the newly accessed router of the mobile terminal;
the newly accessed router transmits a notice including the identifier or IP address of the mobile terminal and the IP address of the router, to the previously accessed router; and,
the previously accessed router transmits a binding cache as the communication information as to the mobile terminal for relaying in a Mobile IP protocol, a header compression information and data addressed to the mobile terminal in the buffer, to the newly accessed router.

23. The communication system using a network-based IP mobility protocol according to any one of Claims 20 to 22, wherein the router buffers in the order of a sequence number included in the header of the received data and forwards the data to the mobile terminal in the order of the sequence number.

24. A control apparatus, which is used for a system in which a mobile terminal, based on the network-based IP mobility protocol, performs communication by transmission and reception of data through a router that belongs to a same link, based on an address uniquely assigned to the mobile terminal, and which performs control of changing over communication when the mobile terminal has moved to another network, comprising:
a communication means for receiving a notice, from the router on the network which the mobile terminal has moved, including the identifier or IP address of the mobile terminal and the identifier or IP address of the router;
a storing means for storing communication information as to the relaying router and the mobile terminal; and
a control means which updates the information on the newly accessed router and the information as to data forwarding between the routers by referring to the storing means about the communication information on the mobile terminal based on the identifier of the mobile terminal included in the notice from the router, and which creates a binding cache forward command notice to instruct forwarding of a binding cache as the communication information as to the mobile terminal for relaying in Mobile IP protocol, from the previously accessed router to the newly accessed router, a header compression information forward command notice to instruct forwarding of header compression information and a buffer forward command notice to instruct forwarding of data addressed to the mobile terminal,
wherein the communication means transmits the binding cache forward command notice, the header compression information forward command notice and the buffer forward command notice to the previously accessed router.

25. The control apparatus according to Claim 24, wherein the control means transmits, a forwarding setup cancellation command notice to instruct cancellation of the forwarding setup between the control apparatus and the previously accessed router, to the previously accessed router by way of a communication means, and combines the forwarding setup cancellation command notice with the binding cache forward command notice, the header compression information forward command notice and the buffer forward command notice.

26. A control apparatus, which is used for a system in which a mobile terminal, based on a network-based IP mobility protocol, performs communication by transmission and reception of data through a router that belongs to a same link, based on an address uniquely assigned to the mobile terminal, and which performs control of changing over communication when the mobile terminal has moved to another network, comprising:
a communication means for receiving a notice, from the router on the network which the mobile terminal has moved, including the identifier or IP address of the mobile terminal and the IP address of the router;
a storing means for storing communication information as to the relaying router and the mobile terminal; and
a control means which updates the information on the newly accessed router and the information as to data forwarding between the routers by referring to the storing means about the communication information on the mobile terminal based on the identifier of the mobile terminal included in the notice from the router, and creates a notice including the IP address of the previously accessed router,
wherein the communication means transmits the notice to the newly accessed router.

27. A router for performing transmission and reception of data with a mobile terminal that belongs to a same link and performs communication using a network-based IP mobility protocol, based on an address uniquely assigned to the mobile terminal under the control of a control apparatus, comprising:
a storing means for storing a binding cache as the communication information on the mobile terminal for relaying in a Mobile IP protocol and header compression information used when data is transmitted to the mobile terminal;
a communication means for receiving from the control apparatus, a binding cache forward command notice, header compression information forward command notice and buffer forward command notice that includes the identifier or IP address of the mobile terminal and the identifier or IP address of the newly accessed router and instructs forwarding of the binding cache, the header compression information and data addressed to the mobile terminal; and,
a control means for forwarding the binding cache, the header compression information and buffer data to the newly accessed router of the mobile terminal in accordance with the forward command notices,
wherein the header of data is subjected to a compression and extension process between the router itself and the mobile terminal, and a proxy function for the mobile terminal is executed when transmission and reception of data on the Mobile IP protocol is performed.

28. A router for performing transmission and reception of data with a mobile terminal that belongs to a same link and performs communication using a network-based IP mobility protocol, based on an address uniquely assigned to the mobile terminal under the control of a control apparatus, comprising:
a storing means for storing a binding cache as the communication information on the mobile terminal for relaying on a Mobile IP protocol and header compression information used when data is transmitted to the mobile terminal;
a communication means for receiving from the newly accessed router of the mobile terminal, a notice including the identifier or IP address of the mobile terminal and the IP address of the router; and,
a control means for forwarding a binding cache, header compression information and data addressed to the mobile terminal in the buffer, to the newly accessed router in accordance with the notice,
wherein the header of data is subjected to a compression and extension process between the router itself and the mobile terminal, and a proxy function for the mobile terminal is executed when transmission and reception of data on the Mobile IP protocol is performed.

29. The router according to Claim 27 or 28, wherein the control means, after forwarding the data received from previously accessed router of the mobile terminal to the mobile terminal, forwards the data received from the control apparatus to the mobile terminal.

30. The router according to Claim 29, wherein the control means buffers the data received from the control apparatus or the previously accessed router of the mobile terminal in the order of a sequence number contained in the headers of the data and forwards the data to the mobile terminal in the order of the sequence number.

31. A communication method, in which a network-based IP mobility protocol is used, for causing a mobile terminal to perform transmission and reception of data through a router that belongs to a same link, based on an address uniquely assigned to the mobile terminal, and causing a control apparatus to perform control of changing over communication of the mobile terminal when the mobile terminal has moved to another network, the method comprising the steps of:
detecting movement of the mobile terminal to the same link, from a notice from the mobile terminal, and giving notice of movement of the mobile terminal to the control apparatus, executed by the router on the network which the mobile terminal has newly accessed, and
transmitting to the previously accessed router, a binding cache forward command notice to instruct forwarding of a binding cache as the communication information as to the mobile terminal for relaying in Mobile IP protocol, a header compression information forward command notice to instruct forwarding of header compression information and a buffer forward command notice to instruct forwarding of data addressed to the mobile terminal, in a combined manner, executed by the control apparatus.

32. A communication method, in which a network-based IP mobility protocol is used, for causing a mobile terminal to perform transmission and reception of data through a router that belongs to a same link, based on an address uniquely assigned to the mobile terminal, and causing a control apparatus to perform control of changing over communication of the mobile terminal when the mobile terminal has moved to another network, the method comprising the steps of:
detecting movement of the mobile terminal to the same link from a notice from the mobile terminal, and giving a notice of movement of the mobile terminal to the control apparatus, executed by the router on the network which the mobile terminal has newly accessed;
transmitting a notice including the IP address of the previously accessed router to the newly accessed router, executed by the control apparatus;
transmitting a notice including the identifier or IP address of the mobile terminal and the IP address of the router, to the previously accessed router, executed by the newly accessed router, and
transmitting a binding cache, header compression information and data addressed to the mobile terminal to the newly accessed router, executed by the previously accessed router.
